(19) **Europäisches Patentamt** / **European Patent Office** / **Office européen des brevets**

(11) **EP 4 761 133 A1**

(12) **EUROPEAN PATENT APPLICATION**
published in accordance with Art. 153(4) EPC

(43) Date of publication:
**17.06.2026 Bulletin 2026/25**

(21) Application number: **24858556.4**

(22) Date of filing: **27.08.2024**

(51) International Patent Classification (IPC):
**H04B 7/06** (2006.01)

(52) Cooperative Patent Classification (CPC):
**H04B 7/06; H04B 7/08; H04W 16/28**

(86) International application number:
**PCT/CN2024/114741**

(87) International publication number:
**WO 2025/045020 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 CN 202311129377**

(71) Applicant: **HUAWEI TECHNOLOGIES CO., LTD.**
**Shenzhen 518129 (CN)**

(72) Inventors:
• **HU, Mengshi**
**Shenzhen, Guangdong 518129 (CN)**

• **GAN, Ming**
**Shenzhen, Guangdong 518129 (CN)**
• **ZHANG, Yan**
**Shenzhen, Guangdong 518129 (CN)**
• **MAO, Zhi**
**Shenzhen, Guangdong 518129 (CN)**
• **LI, Ying**
**Shenzhen, Guangdong 518129 (CN)**

(74) Representative: **Thun, Clemens**
**Mitscherlich PartmbB**
**Karlstraße 7**
**80333 München (DE)**

(54) **COMMUNICATION METHOD AND COMMUNICATION APPARATUS**

(57) This application provides a communication method. The method may be applied to a WLAN system supporting 802.11 series protocols such as a next-generation Wi-Fi protocol of IEEE 802.11ax, for example, 802.11be, Wi-Fi 7, or EHT, and a next-generation protocol of 802.11be, for example, Wi-Fi 8, and may be further applied to a UWB-based wireless personal area network system and a sensing system. The method includes: A first station determines that a plurality of first PPDUs need to be sent to a second station over a high-frequency communication link for beam training; and the first station receives a first stop frame over a low-frequency communication link after sending a part of the first PPDUs, and stops, in response to the first stop frame, sending an unsent first PPDU. The stop frame is transmitted over the low-frequency link, to actively stop sending the PPDU in a beam training process. This improves beam training efficiency.

First station — Second station

S610: Determine to transmit a plurality of first PPDUs and a plurality of second PPDUs over a first communication link

S620: First PPDU

S630: Perform beam training

S640: First stop frame

S650: Second PPDU

S660: Perform beam training

S670: Second stop frame

FIG. 6

## Description

This application claims priority to Chinese Patent Application No. 202311129377.2, filed with the China National Intellectual Property Administration on August 31, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

With development of a wireless local area network (wireless local area network, WLAN), 802.11 is one of current mainstream wireless access standards. The 802.11 standard includes standards below 7 gigahertz (Gigahertz, GHz), such as 802.11a/b/g, 802.11n, 802.11ac, 802.11ax, 802.11be, and 802.11bn, and further includes high-frequency standards (for example, standards at 45 GHz and above), such as the 802.11ad standard, the 802.11ay standard, and a to-be-formulated integrated millimeter wave standard (Integrated mmWave standard) that operate near 60 GHz.

In high-frequency communication, due to a large path loss of a channel, at least one device usually uses directional (directional) communication when two devices communicate with each other. In a case of directional beam transmission (for example, directional sending and/or directional receiving), beam training may be performed through sector-level sweep (sector-level sweep, SLS). Currently, in a beam training process, the two devices may perform beam training based on parameters negotiated in advance. For example, the two devices (a device #1 and a device #2) notify each other of numbers of to-be-sent physical layer protocol data units (physical protocol data unit, PPDU) in advance, for example, x and y. The device #1 is to send x PPDUs, the device #2 is to send y PPDUs, and feedback of a good beam is completed. For the device #1 and/or the device #2, in a PPDU sending process, even if a good receive beam is obtained through training, the PPDU sending process cannot be stopped, resulting in low beam training efficiency.

Therefore, how to improve beam training efficiency becomes an urgent problem to be resolved.

## SUMMARY

This application provides a communication method, to improve beam training efficiency.

According to a first aspect, a communication method is provided. The method may be performed by a first station, or may be performed by a component (for example, a chip or a circuit) of a first station. This is not limited. For ease of description, the following uses an example in which the first station performs the method for description.

The communication method includes: A first station determines to send a plurality of first physical layer protocol data units PPDUs to a second station over a first communication link, where the plurality of first PPDUs are used to train a transmit beam of the first station and/or a receive beam of the second station. The first station sends a part of the plurality of first PPDUs to the second station over the first communication link. The first station receives a first stop frame from the second station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

Based on the foregoing technical solution, after the two multi-link devices (for example, the first station and the second station) establish a communication connection (for example, the first communication link and the second communication link are established between the first station and the second station), beam training may be performed between the first station and the second station, to obtain a good beam for information transmission. Specifically, in the technical solution, that beam training is performed between the first station and the second station includes: The first station determines to send, to the second station over the first communication link, the plurality of first PPDUs for beam training (for example, training the transmit beam of the first station and/or the receive beam of the second station). When the first station sends the part of the plurality of first PPDUs to the second station over the first communication link, and a remaining part of the first PPDUs are not sent, the first station receives the first stop frame from the second station over the second communication link. The first stop frame indicates the first station to stop sending the unsent PPDU in the plurality of first PPDUs over the first communication link. That is, in this technical solution, the station participating in beam training may actively stop, based on the stop frame, sending the PPDU in a beam training process. This improves beam training efficiency.

With reference to the first aspect, in some implementations of the first aspect, the method further includes: The first station determines to receive a plurality of second PPDUs from the second station over the first communication link, where the plurality of second PPDUs are used to train a transmit beam of the second station and/or a receive beam of the first station. The first station cancels, in response to the first stop frame, receiving the plurality of second PPDUs.

Based on the foregoing technical solution, that beam training is performed between the first station and the second station further includes: The first station determines to receive, over the first communication link, the plurality of second PPDUs that are from the second station and that are used for beam training (for example, training the transmit beam of the second station and/or the receive beam of the first station). In this technical solution, after receiving the first stop frame, in addition to stopping sending the first PPDU, the first station may further cancel receiving the second PPDU. In other words, the first stop frame may not only indicate to stop sending the first PPDU by the first station, but also indicate to cancel sending the second PPDU by the second station. This further improves beam training efficiency.

With reference to the first aspect, in some implementations of the first aspect, the method further includes: The first station determines to receive a plurality of second PPDUs from the second station over the first communication link, where the plurality of second PPDUs are used to train a transmit beam of the second station and/or a receive beam of the first station. After the first station receives the first stop frame from the second station over the second communication link, the method further includes: The first station receives a part or all of the plurality of second PPDUs over the first communication link.

Based on the foregoing technical solution, that beam training is performed between the first station and the second station further includes: The first station determines to receive, over the first communication link, the plurality of second PPDUs that are from the second station and that are used for beam training (for example, training the transmit beam of the second station and the receive beam of the first station). In this technical solution, after receiving the first stop frame, the first station stops, in response to the first stop frame, sending the unsent first PPDU, but may still receive, over the first communication link, the second PPDU that is from the second station and that is used for beam training. Therefore, the first station may perform beam training based on the received second PPDU. This improves beam training efficiency while ensuring beam training accuracy.

With reference to the first aspect, in some implementations of the first aspect, the method further includes: The first station determines to receive a plurality of second PPDUs from the second station over the first communication link, where the plurality of second PPDUs are used to train a transmit beam of the second station and/or a receive beam of the first station. Before the first station sends the part of the plurality of first PPDUs to the second station over the first communication link, the method further includes: The first station receives a part or all of the plurality of second PPDUs from the second station over the first communication link.

Based on the foregoing technical solution, that beam training is performed between the first station and the second station further includes: The first station determines to receive, over the first communication link, the plurality of second PPDUs that are from the second station and that are used for beam training (for example, training the transmit beam of the second station and the receive beam of the first station). In this technical solution, the first station may be a responder device for beam training. To be specific, before sending the first PPDU, the first station receives at least one second PPDU from the second station. In this technical solution, roles of the first station and the second station in the beam training process are not limited, and therefore, the technical solution may be applicable to different application scenarios.

With reference to the first aspect, in some implementations of the first aspect, the first station receives the part of the plurality of second PPDUs from the second station over the first communication link, and the method further includes: The first station sends a second stop frame to the second station over the second communication link, where the second stop frame indicates the second station to stop sending an unsent PPDU in the plurality of second PPDUs over the second communication link.

Based on the foregoing technical solution, the first station may indicate, based on the second stop frame, the second station to stop sending the unsent second PPDU. This can further improve beam training efficiency.

With reference to the first aspect, in some implementations of the first aspect, before the first station sends the second stop frame to the second station over the second communication link, the method further includes: The first station performs beam training based on the received part of the second PPDUs. The first station determines a transmit beam of the second station and/or a receive beam of the first station that meet/meets a preset condition.

With reference to the first aspect, in some implementations of the first aspect, the method further includes: The first station determines the receive beam of the first station based on a first mapping table and information about a transmit beam for the received second PPDU, where the first mapping table includes a mapping relationship between the information about the transmit beam for the second PPDU and information about the receive beam of the first station.

Based on the foregoing technical solution, in the beam training process, the first station may quickly determine the matched receive beam with reference to the locally stored first mapping table. This helps quickly determine the beam meeting the preset condition, thereby improving beam training efficiency.

With reference to the first aspect, in some implementations of the first aspect, before the first station receives the part or all of the plurality of second PPDUs from the second station over the first communication link, the method further includes: The first station receives first information from the second station over the second communication link, where the first information includes information about a plurality of transmit beams for sending the plurality of second PPDUs.

Based on the foregoing technical solution, before beam training is performed between the first station and the second station, information about a beam for sending a PPDU in a beam training process may be negotiated over the second communication link, so that a receiver can receive the PPDU based on the information about the beam for sending the PPDU. This improves receiving efficiency of the receiver, and further improves beam training efficiency.

With reference to the first aspect, in some implementations of the first aspect, the first information includes at least one of the following information: an identifier, a radio frequency chain identifier, an antenna identifier, a sector identifier, a count identifier, or an antenna weight vector identifier of the beam for sending the second PPDU.

Based on the foregoing technical solution, the information about the beam for sending the PPDU may be represented in different forms. This improves flexibility of the solution.

With reference to the first aspect, in some implementations of the first aspect, the second PPDU includes a first training field. The first training field is sent on the beam for sending the second PPDU, or the first training field is sent on a beam other than the beam for sending the second PPDU.

Based on the foregoing technical solution, the sent PPDU may include the training field, to complete training of a plurality of beams based on one PPDU. This improves beam training efficiency.

With reference to the first aspect, in some implementations of the first aspect, the method further includes: The first station receives first indication information from the second station over the second communication link, where the first indication information indicates a number of times that the first training field is sent on the beam for sending the second PPDU, or the first indication information indicates a beam for sending the first training field.

With reference to the first aspect, in some implementations of the first aspect, before the first station sends the part of the plurality of first PPDUs to the second station over the first communication link, the method further includes: The first station sends second information to the second station over the second communication link, where the second information includes information about a plurality of transmit beams for sending the plurality of first PPDUs.

With reference to the first aspect, in some implementations of the first aspect, the second information includes at least one of the following information: an identifier, a radio frequency chain identifier, an antenna identifier, a sector identifier, a count identifier, or an antenna weight vector identifier of the beam for sending the first PPDU.

With reference to the first aspect, in some implementations of the first aspect, the first PPDU includes a second training field. The second training field is sent on the beam for sending the first PPDU, or the second training field is sent on a beam other than the beam for sending the first PPDU.

With reference to the first aspect, in some implementations of the first aspect, the method further includes: The first station sends second indication information to the second station over the second communication link, where the second indication information indicates a number of times that the second training field is sent on the beam for sending the first PPDU, or the second indication information indicates a beam for sending the second training field.

With reference to the first aspect, in some implementations of the first aspect, after the first station receives the first stop frame from the second station over the second communication link, the method further includes: The first station stops, in response to the first stop frame after first duration, sending the unsent PPDU in the plurality of first PPDUs.

With reference to the first aspect, in some implementations of the first aspect, the first stop frame includes information about at least one transmit beam of the first station and/or information about at least one receive beam of the second station, and the at least one transmit beam of the first station matches the at least one receive beam of the second station.

Based on the foregoing technical solution, the stop frame may carry the beam information, that is, the beam information does not need to be transmitted based on additional signaling. This reduces signaling overheads.

With reference to the first aspect, in some implementations of the first aspect, the first stop frame further includes quality information of the at least one transmit beam of the first station and/or quality information of the at least one receive beam of the second station.

With reference to the first aspect, in some implementations of the first aspect, before the first station determines to send the plurality of first PPDUs to the second station over the first communication link, the method further includes: The first station determines that a beam for information transmission on the frequency band on which the first communication link between the first station and the second station operates fails.

The beam training solution may be applied to a beam recovery scenario, to improve beam recovery efficiency.

According to a second aspect, a communication method is provided. The method may be performed by a second station, or may be performed by a component (for example, a chip or a circuit) of a second station. This is not limited. For ease of description, the following uses an example in which the second station performs the method for description.

The communication method includes: A second station determines to receive a plurality of first physical layer protocol data units PPDUs from a first station over a first communication link, where the plurality of first PPDUs are used to train a transmit beam of the first station and/or a receive beam of the second station. The second station receives a part of the plurality of first PPDUs from the first station over the first communication link. The second station sends a first stop frame to the first station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

With reference to the second aspect, in some implementations of the second aspect, before the second station sends the first stop frame to the first station over the second communication link, the method further includes: The second station performs beam training based on the part of the first PPDUs. The second station determines a transmit beam of the first station and/or a receive beam of the second station that meet/meets a preset condition.

With reference to the second aspect, in some implementations of the second aspect, the method further includes: The second station determines to send a plurality of second PPDUs to the first station over the first communication link, where the plurality of second PPDUs are used to train a transmit beam of the second station and/or a receive beam of the first station. The second station cancels, based on the first stop frame, sending the plurality of second PPDUs.

With reference to the second aspect, in some implementations of the second aspect, the method further includes: The second station determines to send a plurality of second PPDUs to the first station over the first communication link, where the plurality of second PPDUs are used to train a transmit beam of the second station and/or a receive beam of the first station. After the second station sends the first stop frame to the first station over the second communication link, the method further includes: The second station sends a part or all of the plurality of second PPDUs to the first station over the first communication link.

With reference to the second aspect, in some implementations of the second aspect, the method further includes: The second station determines to send a plurality of second PPDUs to the first station over the first communication link, where the plurality of second PPDUs are used to train a transmit beam of the second station and/or a receive beam of the first station. Before the second station receives the part of the plurality of first PPDUs from the first station over the first communication link, the method further includes: The second station sends a part or all of the plurality of second PPDUs to the first station over the first communication link.

With reference to the second aspect, in some implementations of the second aspect, the second station sends the part of the plurality of second PPDUs to the first station over the first communication link, and the method further includes: The second station receives a second stop frame from the first station over the second communication link, where the second stop frame indicates the second station to stop sending an unsent PPDU in the plurality of second PPDUs over the second communication link.

With reference to the second aspect, in some implementations of the second aspect, after the second station receives the second stop frame from the first station over the second communication link, the method further includes: The second station stops, in response to the second stop frame after second duration, sending the unsent PPDU in the plurality of second PPDUs.

With reference to the second aspect, in some implementations of the second aspect, the method further includes: The second station determines the receive beam of the second station based on a second mapping table and information about a transmit beam for the received first PPDU, where the second mapping table includes a mapping relationship between the information about the transmit beam for the first PPDU and information about the receive beam of the second station.

With reference to the second aspect, in some implementations of the second aspect, before the second station sends the part or all of the plurality of second PPDUs to the first station over the first communication link, the method further includes: The second station sends first information to the first station over the second communication link, where the first information includes information about a plurality of transmit beams for sending the plurality of second PPDUs.

With reference to the second aspect, in some implementations of the second aspect, the first information includes at least one of the following information: an identifier, a radio frequency chain identifier, an antenna identifier, a sector identifier, a count identifier, or an antenna weight vector identifier of the beam for sending the second PPDU.

With reference to the second aspect, in some implementations of the second aspect, the second PPDU includes a first training field. The first training field is sent on the beam for sending the second PPDU, or the first training field is sent on a beam other than the beam for sending the second PPDU.

With reference to the second aspect, in some implementations of the second aspect, the method further includes: The second station sends first indication information to the first station over the second communication link, where the first indication information indicates a number of times that the first training field is sent on the beam for sending the second PPDU, or the first indication information indicates a beam for sending the first training field.

With reference to the second aspect, in some implementations of the second aspect, before the second station receives the part of the plurality of first PPDUs from the first station over the first communication link, the method further includes: The second station receives second information from the first station over the second communication link, where the second information includes information about a plurality of transmit beams for sending the plurality of first PPDUs.

With reference to the second aspect, in some implementations of the second aspect, the second information includes at least one of the following information: an identifier, a radio frequency chain identifier, an antenna identifier, a sector identifier, a count identifier, or an antenna weight vector identifier of the beam for sending the first PPDU.

With reference to the second aspect, in some implementations of the second aspect, the first PPDU includes a second training field. The second training field is sent on the beam for sending the first PPDU, or the second training field is sent on a beam other than the beam for sending the first PPDU.

With reference to the second aspect, in some implementations of the second aspect, the method further includes: The second station receives second indication information from the first station over the second communication link, where the second indication information indicates a number of times that the second training field is sent on the beam for sending the first PPDU, or the second indication information indicates a beam for sending the second training field.

With reference to the second aspect, in some implementations of the second aspect, the first stop frame includes information about at least one transmit beam of the first station and/or information about at least one receive beam of the second station, and the at least one transmit beam of the first station matches the at least one receive beam of the second station.

With reference to the second aspect, in some implementations of the second aspect, the first stop frame further includes quality information of the at least one transmit beam of the first station and/or quality information of the at least one receive beam of the second station.

For technical effect of the method shown in the second aspect and the possible designs of the second aspect, refer to the technical effect in the first aspect and the possible designs of the first aspect.

According to a third aspect, a communication method is provided. The method may be performed by a first station, or may be performed by a component (for example, a chip or a circuit) of a first station. This is not limited. For ease of description, the following uses an example in which the first station performs the method for description.

The communication method includes: A first station sends second information to a second station over a second communication link, where the second information includes information about a plurality of transmit beams for sending a plurality of first PPDUs. The first station sends a part or all of the plurality of first PPDUs to the second station over a first communication link based on the second information, where the first PPDU is used to train a transmit beam of the first station and/or a receive beam of the second station. The first station and the second station are multi-link devices, and a frequency band on which the first communication link operates is higher than a frequency band on which the second communication link operates.

Based on the foregoing technical solution, after the two multi-link devices (for example, the first station and the second station) establish a communication connection (for example, the first communication link and the second communication link are established between the first station and the second station), beam training may be performed between the first station and the second station, to obtain a good beam for information transmission. Specifically, in the technical solution, that beam training is performed between the first station and the second station includes: The first station determines to send, to the second station over the first communication link, the plurality of first PPDUs for beam training (for example, training the transmit beam of the first station and/or the receive beam of the second station). Before the first station sends the part or all of the plurality of first PPDUs to the second station over the first communication link, information about a beam for sending a PPDU in a beam training process may be negotiated over the second communication link, so that a receiver can receive the PPDU based on the information about the beam for sending the PPDU. This improves receiving efficiency of the receiver, and further improves beam training efficiency.

With reference to the third aspect, in some implementations of the third aspect, the second information includes at least one of the following information: an identifier, a radio frequency chain identifier, an antenna identifier, a sector identifier, a count identifier, or an antenna weight vector identifier of the beam for sending the first PPDU.

Based on the foregoing technical solution, the information about the beam for sending the PPDU may be represented in different forms. This improves flexibility of the solution.

With reference to the third aspect, in some implementations of the third aspect, the first PPDU includes a second training field. The second training field is sent on the beam for sending the first PPDU, or the second training field is sent on a beam other than the beam for sending the first PPDU.

Based on the foregoing technical solution, the sent PPDU may include the training field, to complete training of a plurality of beams based on one PPDU. This improves beam training efficiency.

With reference to the third aspect, in some implementations of the third aspect, the method further includes: The first station sends second indication information to the second station over the second communication link, where the second indication information indicates a number of times that the second training field is sent on the beam for sending the first PPDU, or the second indication information indicates a beam for sending the second training field.

With reference to the third aspect, in some implementations of the third aspect, the method further includes: The first station determines to receive a plurality of second PPDUs from the second station over the first communication link, where the plurality of second PPDUs are used to train a transmit beam of the second station and/or a receive beam of the first station. The first station receives first information from the second station over the second communication link, where the first information includes information about a plurality of transmit beams for sending the plurality of second PPDUs.

With reference to the third aspect, in some implementations of the third aspect, the first information includes at least one of the following information: an identifier, a radio frequency chain identifier, an antenna identifier, a sector identifier, a count identifier, or an antenna weight vector identifier of the beam for sending the second PPDU.

With reference to the third aspect, in some implementations of the third aspect, the second PPDU includes a first training field. The first training field is sent on the beam for sending the second PPDU, or the first training field is sent on a beam other than the beam for sending the second PPDU.

With reference to the third aspect, in some implementations of the third aspect, the method further includes: The first station receives first indication information from the second station over the second communication link, where the first indication information indicates a number of times that the first training field is sent on the beam for sending the second PPDU, or the first indication information indicates a beam for sending the first training field.

With reference to the third aspect, in some implementations of the third aspect, when the first station sends the part of the plurality of first PPDUs to the second station over the first communication link, the method further includes: The first station receives a first stop frame from the second station over the second communication link, where the first stop frame indicates the first station to stop sending an unsent PPDU in the plurality of first PPDUs over the first communication link.

Based on the foregoing technical solution, when the first station sends the part of the plurality of first PPDUs to the second station over the first communication link, and a remaining part of the first PPDUs are not sent, the first station receives the first stop frame from the second station over the second communication link. The first stop frame indicates the first station to stop sending the unsent PPDU in the plurality of first PPDUs over the first communication link. That is, in this technical solution, the station participating in beam training may actively stop, based on the stop frame, sending the PPDU in a beam training process. This improves beam training efficiency.

With reference to the third aspect, in some implementations of the third aspect, the method further includes: The first station cancels, in response to the first stop frame, receiving the plurality of second PPDUs.

Based on the foregoing technical solution, after receiving the first stop frame, in addition to stopping sending the first PPDU, the first station may further cancel receiving the second PPDU. In other words, the first stop frame may not only indicate to stop sending the first PPDU by the first station, but also indicate to cancel sending the second PPDU by the second station. This further improves beam training efficiency.

With reference to the third aspect, in some implementations of the third aspect, after the first station receives the first stop frame from the second station over the second communication link, the method further includes: The first station receives a part or all of the plurality of second PPDUs over the first communication link.

Based on the foregoing technical solution, after receiving the first stop frame, the first station stops, in response to the first stop frame, sending the unsent first PPDU, but may still receive, over the first communication link, the second PPDU that is from the second station and that is used for beam training. Therefore, the first station may perform beam training based on the received second PPDU. This improves beam training efficiency while ensuring beam training accuracy.

With reference to the third aspect, in some implementations of the third aspect, before the first station sends the part or all of the plurality of first PPDUs to the second station over the first communication link, the method further includes: The first station receives a part or all of the plurality of second PPDUs from the second station over the first communication link.

Based on the foregoing technical solution, the first station may be a responder device for beam training. To be specific, before sending the first PPDU, the first station receives at least one second PPDU from the second station. In this technical solution, roles of the first station and the second station in the beam training process are not limited, and therefore, the technical solution may be applicable to different application scenarios.

With reference to the third aspect, in some implementations of the third aspect, the first station receives the part of the plurality of second PPDUs from the second station over the first communication link, and the method further includes: The first station sends a second stop frame to the second station over the second communication link, where the second stop frame indicates the second station to stop sending an unsent PPDU in the plurality of second PPDUs over the second communication link.

Based on the foregoing technical solution, the first station may indicate, based on the second stop frame, the second station to stop sending the unsent second PPDU. This can further improve beam training efficiency.

With reference to the third aspect, in some implementations of the third aspect, before the first station sends the second stop frame to the second station over the second communication link, the method further includes: The first station performs beam training based on the received part of the second PPDUs. The first station determines a transmit beam of the second station and/or a receive beam of the first station that meet/meets a preset condition.

With reference to the third aspect, in some implementations of the third aspect, the method further includes: The first station determines the receive beam of the first station based on a first mapping table and information about a transmit beam for the received second PPDU, where the first mapping table includes a mapping relationship between the information about the transmit beam for the second PPDU and information about the receive beam of the first station.

Based on the foregoing technical solution, in the beam training process, the first station may quickly determine the matched receive beam with reference to the locally stored first mapping table. This improves beam training efficiency.

With reference to the third aspect, in some implementations of the third aspect, after the first station receives the first stop frame from the second station over the second communication link, the method further includes: The first station stops, in response to the first stop frame after first duration, sending the unsent PPDU in the plurality of first PPDUs.

With reference to the third aspect, in some implementations of the third aspect, the first stop frame includes information about at least one transmit beam of the first station and/or information about at least one receive beam of the second station, and the at least one transmit beam of the first station matches the at least one receive beam of the second station.

Based on the foregoing technical solution, the stop frame may carry the beam information, that is, the beam information does not need to be transmitted based on additional signaling. This reduces signaling overheads.

With reference to the third aspect, in some implementations of the third aspect, the first stop frame further includes quality information of the at least one transmit beam of the first station and/or quality information of the at least one receive beam of the second station.

With reference to the third aspect, in some implementations of the third aspect, before the first station determines to send the plurality of first PPDUs to the second station over the first communication link, the method further includes: The first station determines that a beam for information transmission on the frequency band on which the first communication link between the first station and the second station operates fails.

The beam training solution may be applied to a beam recovery scenario, to improve beam recovery efficiency.

According to a fourth aspect, a communication method is provided. The method may be performed by a second station, or may be performed by a component (for example, a chip or a circuit) of a second station. This is not limited. For ease of description, the following uses an example in which the second station performs the method for description.

The communication method includes: A second station receives second information from a first station over a second communication link, where the second information includes information about a plurality of transmit beams for sending a plurality of first PPDUs. The second station receives a part or all of the plurality of first PPDUs from the first station over a first communication link based on the second information, where the first PPDU is used to train a transmit beam of the first station and/or a receive beam of the second station. The first station and the second station are multi-link devices, and a frequency band on which the first communication link operates is higher than a frequency band on which the second communication link operates.

With reference to the fourth aspect, in some implementations of the fourth aspect, the second information includes at least one of the following information: an identifier, a radio frequency chain identifier, an antenna identifier, a sector identifier, a count identifier, or an antenna weight vector identifier of the beam for sending the first PPDU.

With reference to the fourth aspect, in some implementations of the fourth aspect, the first PPDU includes a second training field. The second training field is sent on the beam for sending the first PPDU, or the second training field is sent on a beam other than the beam for sending the first PPDU.

With reference to the fourth aspect, in some implementations of the fourth aspect, the method further includes: The second station receives second indication information from the first station over the second communication link, where the second indication information indicates a number of times that the second training field is sent on the beam for sending the first PPDU, or the second indication information indicates a beam for sending the second training field.

With reference to the fourth aspect, in some implementations of the fourth aspect, the method further includes: The second station determines to send a plurality of second PPDUs to the first station over the first communication link, where the plurality of second PPDUs are used to train a transmit beam of the second station and/or a receive beam of the first station. The second station sends first information to the first station over the second communication link, where the first information includes information about a plurality of transmit beams for sending the plurality of second PPDUs.

With reference to the fourth aspect, in some implementations of the fourth aspect, the first information includes at least one of the following information: an identifier, a radio frequency chain identifier, an antenna identifier, a sector identifier, a count identifier, or an antenna weight vector identifier of the beam for sending the second PPDU.

With reference to the fourth aspect, in some implementations of the fourth aspect, the second PPDU includes a first training field. The first training field is sent on the beam for sending the second PPDU, or the first training field is sent on a beam other than the beam for sending the second PPDU.

With reference to the fourth aspect, in some implementations of the fourth aspect, the method further includes: The second station sends first indication information to the first station over the second communication link, where the first indication information indicates a number of times that the first training field is sent on the beam for sending the second PPDU, or the first indication information indicates a beam for sending the first training field.

With reference to the fourth aspect, in some implementations of the fourth aspect, the second station receives the part of the plurality of first PPDUs from the first station over the first communication link, and the method further includes: The second station sends a first stop frame to the first station over the second communication link, where the first stop frame indicates the first station to stop sending an unsent PPDU in the plurality of first PPDUs over the first communication link.

With reference to the fourth aspect, in some implementations of the fourth aspect, before the second station sends the first stop frame to the first station over the second communication link, the second station performs beam training based on the received part of the first PPDUs. The second station determines a transmit beam of the first station and/or a receive beam of the second station that meet/meets a preset condition.

With reference to the fourth aspect, in some implementations of the fourth aspect, the method further includes: The second station determines the receive beam of the second station based on a second mapping table and information about a transmit beam for the received first PPDU, where the second mapping table includes a mapping relationship between the information about the transmit beam for the first PPDU and information about the receive beam of the second station.

With reference to the fourth aspect, in some implementations of the fourth aspect, the method further includes: The second station cancels, in response to the first stop frame, sending the plurality of second PPDUs.

With reference to the fourth aspect, in some implementations of the fourth aspect, after the second station sends the first stop frame to the first station over the second communication link, the method further includes: The second station sends a part or all of the second PPDUs to the first station over the first communication link.

With reference to the fourth aspect, in some implementations of the fourth aspect, before the second station receives the part or all of the plurality of first PPDUs from the first station over the first communication link, the method further includes: The second station sends the part or all of the plurality of second PPDUs to the first station over the first communication link.

With reference to the fourth aspect, in some implementations of the fourth aspect, when the second station sends the part or all of the second PPDUs to the first station over the first communication link, the method further includes: The second station receives a second stop frame from the first station over the second communication link, where the second stop frame indicates the second station to stop sending an unsent PPDU in the plurality of second PPDUs over the second communication link.

With reference to the fourth aspect, in some implementations of the fourth aspect, after the second station receives the second stop frame from the first station over the second communication link, the method further includes: The second station stops, in response to the second stop frame after second duration, sending the unsent PPDU in the plurality of second PPDUs.

With reference to the fourth aspect, in some implementations of the fourth aspect, the first stop frame includes information about at least one transmit beam of the first station and/or information about at least one receive beam of the second station, and the at least one transmit beam of the first station matches the at least one receive beam of the second station.

With reference to the fourth aspect, in some implementations of the fourth aspect, the first stop frame further includes quality information of the at least one transmit beam of the first station and/or quality information of the at least one receive beam of the second station.

For technical effect of the method shown in the fourth aspect and the possible designs of the fourth aspect, refer to the technical effect in the third aspect and the possible designs of the third aspect.

According to a fifth aspect, a communication method is provided. The method may be performed by a first station, or may be performed by a component (for example, a chip or a circuit) of a first station. This is not limited. For ease of description, the following uses an example in which the first station performs the method for description.

The communication method includes: A first station determines to send a plurality of first physical layer protocol data units PPDUs to a second station over a first communication link, where the plurality of first PPDUs are used to train a transmit beam of the first station and/or a receive beam of the second station. The first station sends a part of the plurality of first PPDUs to the second station over the first communication link. The first station receives a first recommendation frame from the second station over a second communication link, where the first recommendation frame includes first beam training information obtained by the second station through beam training. The first station determines, in response to the first recommendation frame, a policy for sending a remaining first PPDU in the plurality of first PPDUs. The first station and the second station are multi-link devices, and a frequency band on which the first communication link operates is higher than a frequency band on which the second communication link operates.

Based on the foregoing technical solution, after the two multi-link devices (for example, the first station and the second station) establish a communication connection (for example, the first communication link and the second communication link are established between the first station and the second station), beam training may be performed between the first station and the second station, to obtain a good beam for information transmission. Specifically, in the technical solution, that beam training is performed between the first station and the second station includes: The first station determines to send, to the second station over the first communication link, the plurality of first PPDUs for beam training (for example, training the transmit beam of the first station and/or the receive beam of the second station). When the first station sends the part of the plurality of first PPDUs to the second station over the first communication link, and a remaining part of the first PPDUs are not sent (or in a beam training process, that is, beam training is not ended), the first station receives the first recommendation frame from the second station over the second communication link. The first recommendation frame includes beam information obtained by the second station through beam training based on the received part of the first PPDUs. Notification of the beam information helps the first station further adjust a beam training policy based on the beam information when sending the remaining first PPDU, to improve beam training accuracy.

With reference to the fifth aspect, in some implementations of the fifth aspect, the first beam training information includes information about at least one transmit beam, meeting a preset condition, of the first station. That the first station determines, in response to the first recommendation frame, the policy for sending the remaining first PPDU in the plurality of first PPDUs includes: The first station determines, in response to the first recommendation frame, a transmit beam for sending the remaining first PPDU in the plurality of first PPDUs.

Based on the foregoing technical solution, when the first beam training information fed back by the second station based on the first recommendation frame includes information, obtained by the second station through beam training, about a transmit beam, meeting the preset condition, of the first station, the first station may determine a direction of the transmit beam for the remaining first PPDU based on the received information about the transmit beam of the first station, for example, change a beam of a subsequent first PPDU, to implement more accurate beam training.

With reference to the fifth aspect, in some implementations of the fifth aspect, the information about the at least one transmit beam of the first station includes quality information of the at least one transmit beam of the first station.

With reference to the fifth aspect, in some implementations of the fifth aspect, the first beam training information includes information about a first transmit beam of the first station. That the first station determines, in response to the first recommendation frame, the policy for sending the remaining first PPDU in the plurality of first PPDUs includes: The first station determines, in response to the first recommendation frame, to send a part or all of remaining first PPDUs in the plurality of first PPDUs on the first transmit beam.

Based on the foregoing technical solution, when the first beam training information fed back by the second station based on the first recommendation frame includes information about a transmit beam, it indicates that the second station may recommend, in a beam training process, that the first station may continue to send a beam, to improve efficiency of receive beam training performed by the second station.

With reference to the fifth aspect, in some implementations of the fifth aspect, the method further includes: The first station receives third indication information from the second station over the second communication link, where the third indication information indicates a number of times of sending the first PPDU on the first transmit beam.

With reference to the fifth aspect, in some implementations of the fifth aspect, the method further includes: The first station determines to receive a plurality of second PPDUs from the second station over the first communication link, where the plurality of second PPDUs are used to train a transmit beam of the second station and/or a receive beam of the first station. After the first station receives the first recommendation frame from the second station over the second communication link, the method further includes: The first station receives the plurality of second PPDUs over the first communication link.

Based on the foregoing technical solution, that beam training is performed between the first station and the second station further includes: The first station determines to receive, over the first communication link, the plurality of second PPDUs that are from the second station and that are used for beam training (for example, training the transmit beam of the second station and the receive beam of the first station). In this technical solution, after receiving the first recommendation frame, and after adjusting, in response to the first recommendation frame, a transmit beam for sending an unsent first PPDU, the first station may further receive, over the first communication link, the second PPDU that is from the second station and that is used for beam training. Therefore, the first station may perform beam training based on the received second PPDU. This improves beam training efficiency while ensuring beam training accuracy.

With reference to the fifth aspect, in some implementations of the fifth aspect, the method further includes: The first station determines to receive a plurality of second PPDUs from the second station over the first communication link, where the plurality of second PPDUs are used to train a transmit beam of the second station and/or a receive beam of the first station. Before the first station sends the part of the plurality of first PPDUs to the second station over the first communication link, the method further includes: The first station receives the plurality of second PPDUs from the second station over the first communication link.

Based on the foregoing technical solution, that beam training is performed between the first station and the second station further includes: The first station determines to receive, over the first communication link, the plurality of second PPDUs that are from the second station and that are used for beam training (for example, training the transmit beam of the second station and the receive beam of the first station). In this technical solution, the first station may be a responder device for beam training. To be specific, before sending the first PPDU, the first station receives at least one second PPDU from the second station. In this technical solution, roles of the first station and the second station in the beam training process are not limited, and therefore, the technical solution may be applicable to different application scenarios.

With reference to the fifth aspect, in some implementations of the fifth aspect, after the first station receives the part of the plurality of second PPDUs from the second station over the first communication link, the method further includes: The first station sends a second recommendation frame to the second station over the second communication link, where the second recommendation frame includes second beam training information obtained by the first station through beam training.

With reference to the fifth aspect, in some implementations of the fifth aspect, before the first station sends the second recommendation frame to the second station over the second communication link, the method further includes: The first station performs beam training based on the received part of the second PPDUs. The first station determines a transmit beam, meeting the preset condition, of the second station, where the second beam training information includes information about the transmit beam of the second station.

With reference to the fifth aspect, in some implementations of the fifth aspect, before the first station sends the second recommendation frame to the second station over the second communication link, the method further includes: The first station performs beam training based on the received part of the second PPDUs. The first station determines a second transmit beam of the second station, where the second transmit beam of the second station is used to send a part or all of remaining second PPDUs in the plurality of second PPDUs, and the second beam training information includes information about the second transmit beam.

Based on the foregoing technical solution, the first station may indicate, based on the second recommendation frame, the second station to adjust a transmit beam for sending an unsent second PPDU. This can further improve beam training accuracy.

With reference to the fifth aspect, in some implementations of the fifth aspect, the method further includes: The first station sends fourth indication information to the second station over the second communication link, where the fourth indication information indicates a number of times of sending the second PPDU on the second transmit beam.

With reference to the fifth aspect, in some implementations of the fifth aspect, the method further includes: The first station determines the receive beam of the first station based on a first mapping table and information about a transmit beam for the received second PPDU, where the first mapping table includes a mapping relationship between the information about the transmit beam for the second PPDU and information about the receive beam of the first station.

Based on the foregoing technical solution, in the beam training process, the first station may quickly determine the matched receive beam with reference to the locally stored first mapping table. This helps quickly determine the beam meeting the preset condition, thereby improving beam training efficiency.

With reference to the fifth aspect, in some implementations of the fifth aspect, before the first station receives the plurality of second PPDUs from the second station over the first communication link, the method further includes: The first station receives first information from the second station over the second communication link, where the first information includes information about a plurality of transmit beams for sending the plurality of second PPDUs.

With reference to the fifth aspect, in some implementations of the fifth aspect, the first information includes at least one of the following information: an identifier, a radio frequency chain identifier, an antenna identifier, a sector identifier, a count identifier, or an antenna weight vector identifier of the beam for sending the second PPDU.

With reference to the fifth aspect, in some implementations of the fifth aspect, the second PPDU includes a first training field. The first training field is sent on the beam for sending the second PPDU, or the first training field is sent on a beam other than the beam for sending the second PPDU.

Based on the foregoing technical solution, the sent PPDU may include the training field, to complete training of a plurality of beams based on one PPDU. This improves beam training efficiency.

With reference to the fifth aspect, in some implementations of the fifth aspect, the method further includes: The first station receives first indication information from the second station over the second communication link, where the first indication information indicates a number of times that the first training field is sent on the beam for sending the second PPDU, or the first indication information indicates a beam for sending the first training field.

With reference to the fifth aspect, in some implementations of the fifth aspect, before the first station sends the part of the plurality of first PPDUs to the second station over the first communication link, the method further includes: The first station sends second information to the second station over the second communication link, where the second information includes information about a plurality of transmit beams for sending the plurality of first PPDUs.

With reference to the fifth aspect, in some implementations of the fifth aspect, the second information includes at least one of the following information: an identifier, a radio frequency chain identifier, an antenna identifier, a sector identifier, a count identifier, or an antenna weight vector identifier of the beam for sending the first PPDU.

With reference to the fifth aspect, in some implementations of the fifth aspect, the first PPDU includes a second training field. The second training field is sent on the beam for sending the first PPDU, or the second training field is sent on a beam other than the beam for sending the first PPDU.

With reference to the fifth aspect, in some implementations of the fifth aspect, the first station sends second indication information to the second station over the second communication link, where the second indication information indicates a number of times that the second training field is sent on the beam for sending the first PPDU, or the second indication information indicates a beam for sending the second training field.

With reference to the fifth aspect, in some implementations of the fifth aspect, before the first station determines to send the plurality of first PPDUs to the second station over the first communication link, the method further includes: The first station determines that a beam for information transmission on the frequency band on which the first communication link between the first station and the second station operates fails.

According to a sixth aspect, a communication method is provided. The method may be performed by a second station, or may be performed by a component (for example, a chip or a circuit) of a second station. This is not limited. For ease of description, the following uses an example in which the second station performs the method for description.

The communication method includes: A second station determines to receive a plurality of first physical layer protocol data units PPDUs from a first station over a first communication link, where the plurality of first PPDUs are used to train a transmit beam of the first station and/or a receive beam of the second station. The second station receives a part of the plurality of first PPDUs from the first station over the first communication link. The second station sends a first recommendation frame to the first station over a second communication link, where the first recommendation frame includes first beam training information obtained by the second station through beam training, and the first recommendation frame indicates the first station to determine a policy for sending a remaining first PPDU in the plurality of first PPDUs. The first station and the second station are multi-link devices, and a frequency band on which the first communication link operates is higher than a frequency band on which the second communication link operates.

With reference to the sixth aspect, in some implementations of the sixth aspect, before the second station sends the first recommendation frame to the first station over the second communication link, the method further includes: The second station performs beam training based on the part of the first PPDUs. The second station determines a transmit beam, meeting a preset condition, of the first station, where the first beam training information includes information about at least one transmit beam, meeting the preset condition, of the first station.

With reference to the sixth aspect, in some implementations of the sixth aspect, the information about the at least one transmit beam of the first station includes quality information of the at least one transmit beam of the first station.

With reference to the sixth aspect, in some implementations of the sixth aspect, before the second station sends the first recommendation frame to the first station over the second communication link, the method further includes: The second station performs beam training based on the part of the first PPDUs. The second station determines a first transmit beam of the first station, where the first transmit beam of the first station is used to send a part or all of remaining first PPDUs in the plurality of first PPDUs, and the first beam training information includes information about the first transmit beam.

With reference to the sixth aspect, in some implementations of the sixth aspect, the method further includes: The second station sends third indication information to the first station over the second communication link, where the third indication information indicates a number of times of sending the first PPDU on the first transmit beam.

With reference to the sixth aspect, in some implementations of the sixth aspect, the method further includes: The second station determines to send a plurality of second PPDUs to the first station over the first communication link, where the plurality of second PPDUs are used to train a transmit beam of the second station and/or a receive beam of the first station. After the second station sends the first recommendation frame to the first station over the second communication link, the method further includes: The second station sends the plurality of second PPDUs to the first station over the first communication link.

With reference to the sixth aspect, in some implementations of the sixth aspect, the method further includes: The second station determines to send a plurality of second PPDUs to the first station over the first communication link, where the plurality of second PPDUs are used to train a transmit beam of the second station and/or a receive beam of the first station. Before the second station receives the part of the plurality of first PPDUs from the first station over the first communication link, the method further includes: The second station sends the plurality of second PPDUs to the first station over the first communication link.

With reference to the sixth aspect, in some implementations of the sixth aspect, the second station sends a part of the plurality of second PPDUs to the first station over the first communication link, and the method further includes: The second station receives a second recommendation frame from the first station over the second communication link, where the second recommendation frame includes second beam training information obtained by the first station through beam training. The second station determines, in response to the second recommendation frame, a policy for sending the remaining second PPDU in the plurality of second PPDUs.

With reference to the sixth aspect, in some implementations of the sixth aspect, the second beam training information includes information about at least one transmit beam, meeting a preset condition, of the second station. That the second station determines, in response to the second recommendation frame, the policy for sending the remaining second PPDU in the plurality of second PPDUs includes: The second station determines, in response to the second recommendation frame, a transmit beam for sending the remaining second PPDU in the plurality of second PPDUs.

With reference to the sixth aspect, in some implementations of the sixth aspect, the second beam training information includes information about a second transmit beam of the second station. That the second station determines, in response to the second recommendation frame, the policy for sending the remaining second PPDU in the plurality of second PPDUs includes: The second station determines, in response to the second recommendation frame, to send a part or all of remaining second PPDUs in the plurality of second PPDUs on the second transmit beam.

With reference to the sixth aspect, in some implementations of the sixth aspect, the second station receives fourth indication information from the first station over the second communication link, where the fourth indication information indicates a number of times of sending the second PPDU on the second transmit beam.

With reference to the sixth aspect, in some implementations of the sixth aspect, the method further includes: The second station determines the receive beam of the second station based on a second mapping table and information about a transmit beam for the received first PPDU, where the second mapping table includes a mapping relationship between the information about the transmit beam for the first PPDU and information about the receive beam of the second station.

With reference to the sixth aspect, in some implementations of the sixth aspect, before the second station sends the part or all of the plurality of second PPDUs to the first station over the first communication link, the method further includes: The second station sends first information to the first station over the second communication link, where the first information includes information about a plurality of transmit beams for sending the plurality of second PPDUs.

With reference to the sixth aspect, in some implementations of the sixth aspect, the first information includes at least one of the following information: an identifier, a radio frequency chain identifier, an antenna identifier, a sector identifier, a count identifier, or an antenna weight vector identifier of the beam for sending the second PPDU.

With reference to the sixth aspect, in some implementations of the sixth aspect, the second PPDU includes a first training field. The first training field is sent on the beam for sending the second PPDU, or the first training field is sent on a beam other than the beam for sending the second PPDU.

With reference to the sixth aspect, in some implementations of the sixth aspect, the method further includes: The second station sends first indication information to the first station over the second communication link, where the first indication information indicates a number of times that the first training field is sent on the beam for sending the second PPDU, or the first indication information indicates a beam for sending the first training field.

With reference to the sixth aspect, in some implementations of the sixth aspect, before the second station receives the part of the plurality of first PPDUs from the first station over the first communication link, the method further includes: The second station receives second information from the first station over the second communication link, where the second information includes information about a plurality of transmit beams for sending the plurality of first PPDUs.

With reference to the sixth aspect, in some implementations of the sixth aspect, the second information includes at least one of the following information: an identifier, a radio frequency chain identifier, an antenna identifier, a sector identifier, a count identifier, or an antenna weight vector identifier of the beam for sending the first PPDU.

With reference to the sixth aspect, in some implementations of the sixth aspect, the first PPDU includes a second training field. The second training field is sent on the beam for sending the first PPDU, or the second training field is sent on a beam other than the beam for sending the first PPDU.

With reference to the sixth aspect, in some implementations of the sixth aspect, the method further includes: The second station receives second indication information from the first station over the second communication link, where the second indication information indicates a number of times that the second training field is sent on the beam for sending the first PPDU, or the second indication information indicates a beam for sending the second training field.

For technical effect of the method shown in the sixth aspect and the possible designs of the sixth aspect, refer to the technical effect in the fifth aspect and the possible designs of the fifth aspect.

According to a seventh aspect, a communication apparatus is provided. The apparatus is configured to perform the method provided in the first aspect, the third aspect, or the fifth aspect. Specifically, the apparatus may include a unit and/or a module, for example, a processing unit and/or a communication unit, that are/is configured to perform the method provided in any one of the foregoing implementations of the first aspect, the third aspect, or the fifth aspect.

For example, when the communication apparatus is the first station in the first aspect, the processing unit is configured to determine to send a plurality of first physical layer protocol data units PPDUs to a second station over a first communication link, where the plurality of first PPDUs are used to train a transmit beam of the first station and/or a receive beam of the second station. The communication unit is configured to send a part of the plurality of first PPDUs to the second station over the first communication link. The communication unit is configured to receive a first stop frame from the second station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

For example, when the communication apparatus is the first station in the third aspect, the communication unit is configured to send second information to a second station over a second communication link, where the second information includes information about a plurality of transmit beams for sending a plurality of first PPDUs. The communication unit is configured to send a part or all of the plurality of first PPDUs to the second station over a first communication link, where the first PPDU is used to train a transmit beam of the first station and/or a receive beam of the second station. The first station and the second station are multi-link devices, and a frequency band on which the first communication link operates is higher than a frequency band on which the second communication link operates.

For example, when the communication apparatus is the first station in the fifth aspect, the processing unit is configured to determine to send a plurality of first physical layer protocol data units PPDUs to a second station over a first communication link, where the plurality of first PPDUs are used to train a transmit beam of the first station and/or a receive beam of the second station. The communication unit is configured to send a part of the plurality of first PPDUs to the second station over the first communication link. The communication unit is configured to receive a first recommendation frame from the second station over a second communication link, where the first recommendation frame includes first beam training information obtained by the second station through beam training. The processing unit is configured to determine, in response to the first recommendation frame, a policy for sending a remaining first PPDU in the plurality of first PPDUs. The first station and the second station are multi-link devices, and a frequency band on which the first communication link operates is higher than a frequency band on which the second communication link operates.

In an implementation, the communication unit may be a transceiver or an input/output interface, and the processing unit may be at least one processor. Optionally, the transceiver may be a transceiver circuit. Optionally, the input/output interface may be an input/output circuit.

For example, when the communication apparatus is the first station in the first aspect, the processor is configured to determine to send a plurality of first physical layer protocol data units PPDUs to a second station over a first communication link, where the plurality of first PPDUs are used to train a transmit beam of the first station and/or a receive beam of the second station. The transceiver is configured to send a part of the plurality of first PPDUs to the second station over the first communication link. The transceiver is configured to receive a first stop frame from the second station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

For example, when the communication apparatus is the first station in the third aspect, the transceiver is configured to send second information to a second station over a second communication link, where the second information includes information about a plurality of transmit beams for sending a plurality of first PPDUs. The transceiver is configured to send a part or all of the plurality of first PPDUs to the second station over a first communication link, where the first PPDU is used to train a transmit beam of the first station and/or a receive beam of the second station. The first station and the second station are multi-link devices, and a frequency band on which the first communication link operates is higher than a frequency band on which the second communication link operates.

For example, when the communication apparatus is the first station in the fifth aspect, the processor is configured to determine to send a plurality of first physical layer protocol data units PPDUs to a second station over a first communication link, where the plurality of first PPDUs are used to train a transmit beam of the first station and/or a receive beam of the second station. The transceiver is configured to send a part of the plurality of first PPDUs to the second station over the first communication link. The transceiver is configured to receive a first recommendation frame from the second station over a second communication link, where the first recommendation frame includes first beam training information obtained by the second station through beam training. The processor is configured to determine, in response to the first recommendation frame, a policy for sending a remaining first PPDU in the plurality of first PPDUs. The first station and the second station are multi-link devices, and a frequency band on which the first communication link operates is higher than a frequency band on which the second communication link operates.

In another implementation, the apparatus is a chip, a chip system, or a circuit used in the first station. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus is configured to perform the method provided in the second aspect, the fourth aspect, or the sixth aspect. Specifically, the apparatus may include a unit and/or a module, for example, a processing unit and/or a communication unit, that are/is configured to perform the method provided in any one of the foregoing implementations of the second aspect, the fourth aspect, or the sixth aspect.

For example, when the communication apparatus is the second station in the second aspect, the processing unit is configured to determine to receive a plurality of first physical layer protocol data units PPDUs from a first station over a first communication link, where the plurality of first PPDUs are used to train a transmit beam of the first station and/or a receive beam of the second station. The communication unit is configured to receive a part of the plurality of first PPDUs from the first station over the first communication link. The communication unit is configured to send a first stop frame to the first station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

For example, when the communication apparatus is the second station in the fourth aspect, the communication unit is configured to receive second information from a first station over a second communication link, where the second information includes information about a plurality of transmit beams for sending a plurality of first PPDUs. The communication unit is configured to receive a part or all of the plurality of first PPDUs from the first station over a first communication link, where the first PPDU is used to train a transmit beam of the first station and/or a receive beam of the second station. The first station and the second station are multi-link devices, and a frequency band on which the first communication link operates is higher than a frequency band on which the second communication link operates.

For example, when the communication apparatus is the second station in the sixth aspect, the processing unit is configured to determine to receive a plurality of first physical layer protocol data units PPDUs from a first station over a first communication link, where the plurality of first PPDUs are used to train a transmit beam of the first station and/or a receive beam of the second station. The communication unit is configured to receive a part of the plurality of first PPDUs from the first station over the first communication link. The communication unit is configured to send a first recommendation frame to the first station over a second communication link, where the first recommendation frame includes first beam training information obtained by the second station through beam training, and the first recommendation frame indicates the first station to determine a policy for sending a remaining first PPDU in the plurality of first PPDUs. The first station and the second station are multi-link devices, and a frequency band on which the first communication link operates is higher than a frequency band on which the second communication link operates.

In an implementation, the communication unit may be a transceiver or an input/output interface, and the processing unit may be at least one processor. Optionally, the transceiver may be a transceiver circuit. Optionally, the input/output interface may be an input/output circuit.

For example, when the communication apparatus is the second station in the second aspect, the processor is configured to determine to receive a plurality of first physical layer protocol data units PPDUs from a first station over a first communication link, where the plurality of first PPDUs are used to train a transmit beam of the first station and/or a receive beam of the second station. The transceiver is configured to receive a part of the plurality of first PPDUs from the first station over the first communication link. The processor is configured to: perform beam training based on the part of the first PPDUs, and determine a transmit beam of the first station and/or a receive beam of the second station that meet/meets a preset condition. The transceiver is configured to send a first stop frame to the first station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

For example, when the communication apparatus is the second station in the fourth aspect, the transceiver is configured to receive second information from a first station over a second communication link, where the second information includes information about a plurality of transmit beams for sending a plurality of first PPDUs. The transceiver is configured to receive a part or all of the plurality of first PPDUs from the first station over a first communication link, where the first PPDU is used to train a transmit beam of the first station and/or a receive beam of the second station. The first station and the second station are multi-link devices, and a frequency band on which the first communication link operates is higher than a frequency band on which the second communication link operates.

For example, when the communication apparatus is the second station in the sixth aspect, the processor is configured to determine to receive a plurality of first physical layer protocol data units PPDUs from a first station over a first communication link, where the plurality of first PPDUs are used to train a transmit beam of the first station and/or a receive beam of the second station. The transceiver is configured to receive a part of the plurality of first PPDUs from the first station over the first communication link. The transceiver is configured to send a first recommendation frame to the first station over a second communication link, where the first recommendation frame includes first beam training information obtained by the second station through beam training, and the first recommendation frame indicates the first station to determine a policy for sending a remaining first PPDU in the plurality of first PPDUs. The first station and the second station are multi-link devices, and a frequency band on which the first communication link operates is higher than a frequency band on which the second communication link operates.

In another implementation, the apparatus is a chip, a chip system, or a circuit used in the second station. When the apparatus is a chip, a chip system, or a circuit used in a network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a ninth aspect, a communication apparatus is provided. The apparatus includes: a memory, configured to store a program; and at least one processor, configured to execute a computer program or instructions stored in the memory, to perform the method in any one of the implementations of the first aspect to the sixth aspect or perform the method in any one of the implementations of the second aspect to the sixth aspect.

According to a tenth aspect, this application provides a processor, configured to perform the methods in the foregoing aspects.

Unless otherwise specified, or if operations, such as sending and obtaining/receiving, related to the processor do not conflict with actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to an eleventh aspect, a computer-readable storage medium is provided. The computer-readable medium stores program code executed by a device, and the program code includes instructions for performing the method provided in any one of the implementations of the first aspect to the sixth aspect.

According to a twelfth aspect, a computer program product including instructions is provided. When the computer program product runs on a computer, the computer is enabled to perform the method provided in to any one of the implementations of the first aspect to the sixth aspect.

According to a thirteenth aspect, a chip is provided. The chip includes a processor and a communication interface. The processor reads, through the communication interface, instructions stored in a memory, to perform the method provided in any one of the implementations of the first aspect to the sixth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations.

According to a fourteenth aspect, a communication system is provided. The communication system includes the first station in the first aspect and the second station in the second aspect.

According to a fifteenth aspect, a communication system is provided. The communication system includes the first station in the third aspect and the second station in the fourth aspect.

According to a sixteenth aspect, a communication system is provided. The communication system includes the first station in the fifth aspect and the second station in the sixth aspect.

## BRIEF DESCRIPTION OF DRAWINGS

FIG. 1 is a diagram of an application scenario to which an embodiment of this application is applicable;
FIG. 2 is a diagram of a structure of an apparatus according to an embodiment of this application;
FIG. 3 is a diagram of a PPDU format;
FIG. 4 is a diagram of a structure of a beacon interval BI;
FIG. 5 is a diagram of a beam link maintenance time;
FIG. 6 is a schematic flowchart of a communication method according to an embodiment of this application;
FIG. 7 is a diagram of receiving a first stop frame by a first station according to an embodiment of this application;
FIG. 8 is another diagram of receiving a first stop frame by a first station according to an embodiment of this application;
FIG. 9 is still another diagram of receiving a first stop frame by a first station according to an embodiment of this application;
FIG. 10 is yet another diagram of receiving a first stop frame by a first station according to an embodiment of this application;
FIG. 11 is still yet another diagram of receiving a first stop frame by a first station according to an embodiment of this application;
FIG. 12 is a schematic flowchart of another communication method according to an embodiment of this application;
FIG. 13 is a diagram of receiving a first recommendation frame by a first station according to an embodiment of this application;
FIG. 14 is another diagram of receiving a first recommendation frame by a first station according to an embodiment of this application;
FIG. 15 is still another diagram of receiving a first recommendation frame by a first station according to an embodiment of this application;
FIG. 16 is yet another diagram of receiving a first recommendation frame by a first station according to an embodiment of this application;
(a) to (c) in FIG. 17 are diagrams of adjusting a beam by a first station according to an embodiment of this application;
FIG. 18 is a schematic flowchart of still another communication method according to an embodiment of this application;
FIG. 19 is a block diagram of a communication apparatus according to an embodiment of this application;
FIG. 20 is a diagram of another communication apparatus according to an embodiment of this application; and
FIG. 21 is a diagram of a chip system according to an embodiment of this application.

## DESCRIPTION OF EMBODIMENTS

For ease of understanding embodiments of this application, the following descriptions are provided first.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, the word like "S610" is merely an identifier for ease of description, and do not limit a sequence of performing steps.

Third, in embodiments of this application, the word like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word like "example" or "for example" is intended to present a related concept in a specific manner.

Fourth, "store" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, "of (of)", "corresponding or relevant (corresponding, relevant)", "corresponding (corresponding)", and "associate (associate)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that, when a difference between the terms is not emphasized, meanings to be expressed are consistent.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The following describes technical solutions of this application with reference to accompanying drawings.

The technical solutions provided in embodiments of this application are applicable to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficient (high efficient, HE) standard, and the 802.11be standard is referred to as an extremely high throughput (extremely high throughput, EHT) standard. 802.11bf includes two major categories of standards: a low frequency (for example, sub-7 GHz) and a high frequency (for example, 60 GHz). Sub-7 GHz is implemented mainly based on standards such as 802.11ac, 802.11ax, 802.11be, and a next-generation standard. 60 GHz is implemented mainly based on standards such as 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of used coverage and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, an internet of things (internet of things, IoT) network, or vehicle-to-everything (vehicle-to-x, V2X).

The foregoing communication systems applicable to this application are merely examples for descriptions, and the communication systems applicable to this application are not limited thereto. This is uniformly described herein, and details are not described below again.

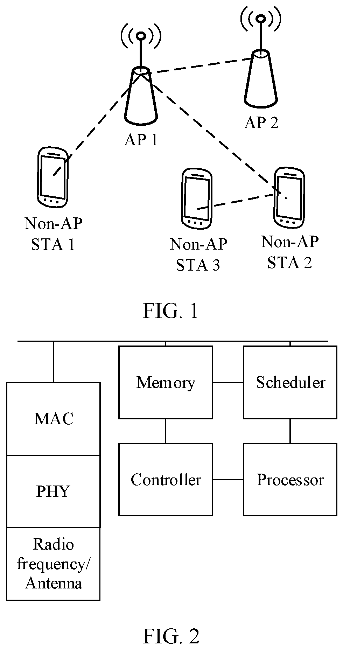

FIG. 1 is a diagram of an application scenario to which an embodiment of this application is applicable. As shown in FIG. 1, a communication method provided in this application is applicable to data communication between an access point (access point, AP) and a station (station, STA). The station may be a non-access point station (non-access point station, non-AP STA), which is briefly referred to as a non-AP station or a STA. Specifically, the solutions of this application are applicable to data communication between an AP and one or more non-AP stations (for example, data communication between an AP 1 and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100-odd meters. Certainly, the access point may alternatively be deployed outdoors. The access point is equivalent to a bridge that connects the wired network and the wireless network. The access point is mainly used to connect various wireless network clients together and then connect the wireless network to an ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, 802.11ay, and 802.11bn.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water or electricity meter in a smart home, and a sensor in a smart city.

The AP or the non-AP station may include a transmitter, a receiver, a memory, a processor, and the like. The transmitter and the receiver are configured to send and receive packet structures respectively. The memory is configured to store signaling information, store a preset value pre-agreed on, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, a radio frequency or an antenna, and the like are configured to implement related functions of the foregoing transmitter and receiver. As shown in FIG. 2, in addition to the MAC layer processing module, the PHY layer processing module, the radio frequency or the antenna, a memory, and a processor, the apparatus may further include a controller and a scheduler.

It should be understood that FIG. 2 shows merely an example of an apparatus provided in this application, and does not constitute a limitation on this application. For example, the apparatus may alternatively not include the controller and/or the scheduler.

For ease of understanding of the technical solutions in embodiments of this application, some terms or concepts that may be used in embodiments of this application are first briefly described.

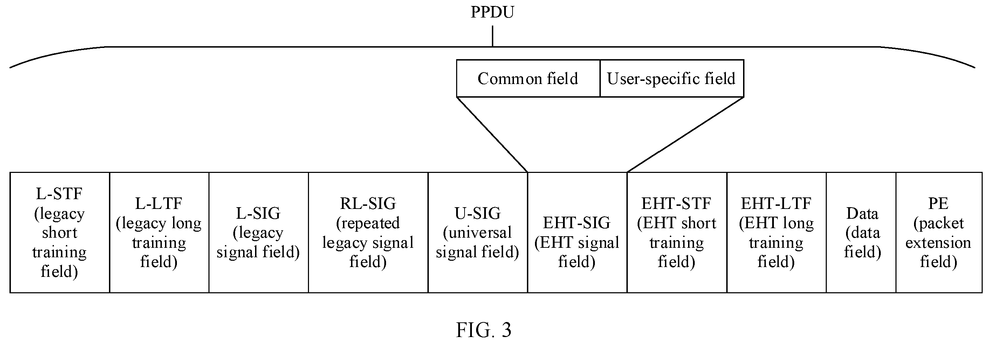

1. Physical layer protocol data unit (physical protocol data unit, PPDU): FIG. 3 is a diagram of a PPDU format. The PPDU includes a legacy short training field (Legacy Short Training Field, L-STF), a legacy long training field (Legacy Long Training Field, L-LTF), a legacy signal field (Legacy Signal Field, L-SIG), a repeated legacy signal field (repeated legacy signal field, RL-SIG), a universal signal field (universal SIG, U-SIG), an ultra-high throughput signal field or extremely high throughput signal field (extremely high throughput, EHT-SIG), an EHT short training field (EHT short training field, EHT-STF), an EHT long training field (EHT long training field, EHT-LTF), a data (Data) field, and a package extension (package extension, PE) field. The L-STF, the L-LTF, the L-SIG, the RL-SIG, the U-SIG, the EHT-SIG, the EHT-STF, and the EHT-LTF are a part of structures in a physical layer header (or referred to as a preamble part) of the PPDU.

The L-STF, the L-LTF, and the L-SIG may be understood as legacy preamble fields, and are used to ensure coexistence of a new device and a legacy device. The RL-SIG is used to enhance reliability of a legacy signal field.

The U-SIG and the EHT-SIG are signal fields. The U-SIG is used to carry some common information, for example, information indicating a PPDU version, information indicating uplink/downlink, information indicating a frequency domain bandwidth of the PPDU, and puncturing indication information. The EHT-SIG includes information indicating resource allocation, information indicating data demodulation, and the like.

It should be noted that in embodiments of this application, fields in a PPDU in an 802.11be scenario are used as an example for description. The fields in the PPDU mentioned in embodiments of this application are not limited to fields related to 802.11be. The fields in the PPDU mentioned in embodiments of this application may alternatively be fields related to a standard version later than 802.11be, including but not limited to a case that a PPDU signal field in a next-generation protocol is ultra-high reliability signaling (ultra-high reliability signaling, UHR-SIG).

2. Directional communication: A WLAN has been developed for many generations, including standards below 7 GHz, such as 802.11a/b/g, 802.11n, 802.11ac, 802.11ax, 802.11be, and 802.11bn, and further including high-frequency standards (standards of 45 GHz and above): such as the 802.11ad standard, the 802.11ay standard, and a to-be-formulated integrated millimeter wave standard (Integrated mmWave standard) that operate near 60 GHz.

In high-frequency communication, due to characteristics such as a large path loss of a channel, at least one device usually needs to use directional (directional) communication when two devices communicate with each other. That is, a "directional+directional" or "directional+omnidirectional" communication mode is usually used between devices.

3. Sector-level sweep (sector-level sweep, SLS) phase: Specifically, the SLS phase mainly includes the following four parts:

an initiator sector sweep (initiator sector sweep, ISS) phase, used to train a directional transmit beam of an initiator, where the initiator directionally sends training data on a beam of a specific width, and a responder receives the training data in a quasi-omnidirectional mode;

a responder sector sweep (responder sector sweep, RSS) phase, used to train a directional transmit beam of the responder, where the responder directionally sends training data on a beam of a specific width, where the training data includes optimal transmit sector information of the initiator in a previous phase; and in this case, the initiator receives the training data in a quasi-omnidirectional mode;

a sector sweep feedback (sector sweep feedback, SSW-Feedback) phase, where feedback information is a list of initiator transmit sectors that are sorted based on sector quality and includes an optimal sector of the responder in the previous phase, and in this case, the responder is in a quasi-omnidirectional receive mode; and

a sector sweep acknowledgment (sector sweep acknowledgment, SSW-ACK) phase, where when SLS is performed before a data transmission interval (data transfer interval, DTI) phase, the SSW-ACK phase may not exist, and when SLS is performed in the DTI phase, the SSW-ACK phase is required; and in the SSW-ACK phase, the responder feeds back a list of responder transmit sectors that are sorted based on quality.

It should be understood that an omnidirectional antenna is used by a device to perform omnidirectional sending or omnidirectional receiving. The omnidirectional antenna radiates evenly at 360° in a horizontal direction, that is, has no directivity, and has a beam with a specific width in a vertical direction. Usually, a smaller lobe width indicates a larger gain. The omnidirectional antenna has large coverage, and is usually used in a large-area station in a suburban area in a communication system. Correspondingly, a directional antenna is used by the device to perform directional sending or directional receiving, and radiates within a specific angle range in a horizontal direction, that is, has directivity. For the directional antenna similar to the omnidirectional antenna, a smaller lobe width indicates a larger gain. The directional antenna is usually used in an environment of a long communication distance, small coverage, a high target density, and high frequency usage in the communication system.

4. Beam refinement protocol (Beam Refinement Protocol, BRP): is a complete protocol for beam refinement between a transmitter and a receiver. One or more BRP frames (frame) or BRP packets (packet) are sent by the receiver and the transmitter, so that beam training and beam tracking processes of the receiver and the transmitter can be performed. For example, the BRP packet is a special packet formed by suffixing a training (training, TRN) field to a data (data) field in a PPDU. The transmitter may adjust a beam direction of a transmit antenna based on some TRN subfields included in the TRN field, or the receiver may adjust a beam direction of a receive antenna when receiving a TRN subfield in the TRN field.

5. Beam maintenance: Because directional beam transmission (for example, directional sending or directional receiving) is used in a high frequency, a related design of beam maintenance and recovery helps improve system stability and efficiency. A solution for maintaining and recovering an established beam is specified in an existing protocol (for example, 802.11ay).

For example, a procedure related to beamformed link maintenance is defined in 802.11ay. Beamformed link maintenance (Beamformed Link Maintenance) allows a pair of stations to perform maintenance after a beamformed link is established. A beamformed link may be understood as a beam training result obtained by successfully performing a latest SLS process or BRP process.

For example, a beam link maintenance time needs to be determined in beam link maintenance. Each beamformed link corresponds to one beam link maintenance time, and the beam link maintenance time has a downward counting function and may be understood as a timer. When the beam link maintenance time is 0, the timer expires. In addition, the timer also has a function of being paused. For example, the timer may be paused in the following periods:

(1) a beacon transmission interval (Beacon Transmission Interval) and association beamforming training (association beamforming training, A-BFT) in a beacon interval (Beacon interval);
(2) a service period (SP) in which no station participates and a contention-based access period (CBAP); and
(3) a station sleep period and the like.

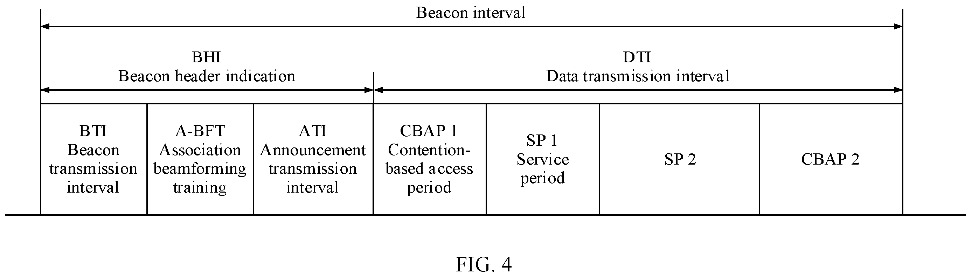

FIG. 4 is a diagram of a structure of a beacon interval BI. As shown in FIG. 4, the beacon interval is divided into a beacon header indication (beacon header indication, BHI) and a data transmission interval (data transmission interval, DTI). The BHI further includes a beacon transmission interval (beacon transmission interval, BTI), association beamforming training (association beamforming training, A-BFT), and an announcement transmission interval (announcement transmission interval, ATI).

Specifically, an AP sends a plurality of beacon (beacon) frames in the BTI based on a sector number. The beacon frames are used for downlink sector sweep. A-BFT is used by a STA for association and uplink sector sweep. The ATI is used by the AP to poll the STA for buffered data information and allocate a resource in the data transmission interval (data transmission interval, DTI) to the STA. The entire DTI is divided into several subintervals, and the subintervals are divided into a contention-based access period (contention-based access period, CBAP) and a service period (service period, SP) in an access manner. In the service period, scheduling transmission is performed without contention.

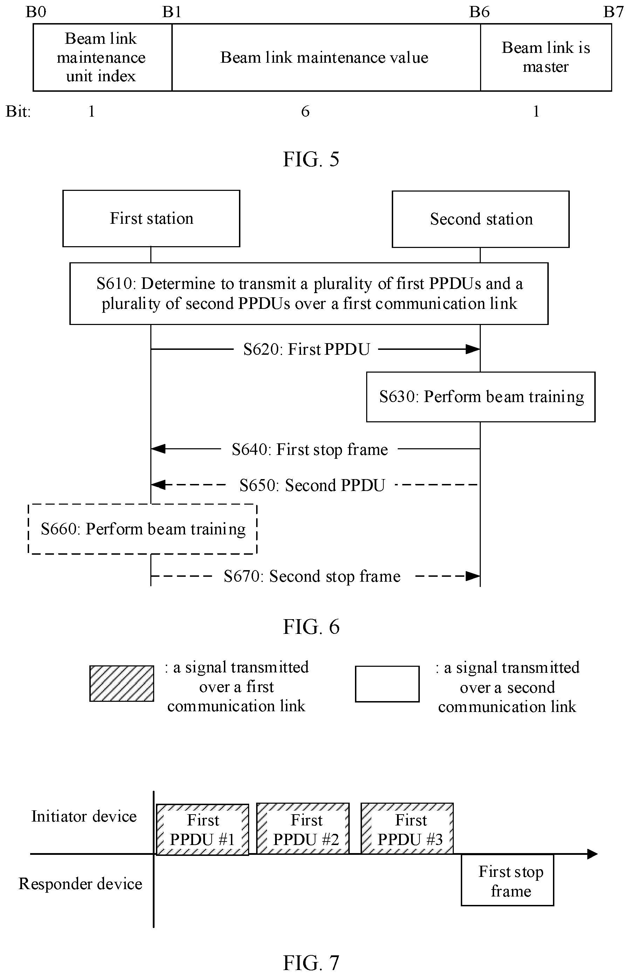

For example, the beam link maintenance time is represented by fields shown in FIG. 5. It can be seen from FIG. 5 that the fields representing the beam link maintenance time include beam link maintenance unit index (Beam Link Maintenance unit index, BLMU), beam link maintenance value (Beam Link Maintenance value, BLMV), and beam link is master (Beam Link is master).

The beam link maintenance time satisfies the following formula:

$$\text{dot11 Beam Link Maintenancetime} = \text{BLMU} \times \text{BLMV}$$

Table 1 shows a meaning represented by the BLMU as follows:

Table 1

| Beam link maintenance unit index | Beam link maintenance unit ($\mu$s) |
|---|---|
| 0 | 32 |
| 1 | 2000 |

Table 2 shows a meaning represented by beam link is master (Beam Link is master) as follows:

Table 2

| "Beam link is master" field of a station A (BeamLinkismaster subfield (STA-A)) | "Beam link is master" field of a station B (BeamLinkismaster subfield (STA-B)) | Relationship between a beam link maintenance time of the station A and a beam link maintenance time of the station B (dot11BeamLinkMainte nancetime (STA-A) vs. dot11BeamLinkMainte nancetime (STA-B)) | Result (result) |
|---|---|---|---|
| 0 | 0 | $\geq$ | Follows the beam link maintenance time of the station A (dot11Beam-LinkMainte nancetime (STA-A)) |
| 1 | 0 | >, <, and = | Follows the beam link maintenance time of the station A (dot11Beam-LinkMainte nancetime (STA-A)) |
| 1 | 1 | = | Follows the beam link maintenance time of the station A (dot11Beam-LinkMainte nancetime (STA-A)) |
| 0 or 1 | 0 or 1 | | Undefined (undefined) |

[0, 0] indicates that the beam link maintenance time is a larger value of the two stations.

[0, 1] or [1, 0] indicates that the link maintenance time is a time corresponding to a station whose beam link is master is set to 1 in the two stations.

[1, 1] indicates that the two stations use a same value, and the value is the link maintenance time of each of the two stations.

The foregoing link maintenance time may be carried in a plurality of frames, for example, an SSW-feedback frame and an SSW-ack frame in SLS, or may exist in a sector ack frame.

It should be noted that for meanings of related parameters in Table 1 and Table 2, refer to definitions in Table 9-429 and Table 9-430 in an existing protocol (for example, the IEEE 802.11 Revme D3.0 protocol). Details are not described herein again.

6. Beam recovery: After a beam link maintenance time is obtained, two stations (an initiator and a responder) may perform a "partial SLS" (Partial SLS) process when the beam link maintenance time expires (when a timer decreases to 0):

Step 1: The responder configures a receive mode of the responder to a "quasi-omnidirectional" mode, and performs antenna switching at an interval of specific duration, where the specific duration is related to a number of sectors indicated in a partial number of sectors field (Partial Number of Sectors field) obtained from a transmitter.

Step 2: The initiator initiates ISS, and the initiator repeats a transmit sector set of the initiator for a specific number of times, where the number of times is related to a value in a partial number of receive antennas field (Partial Number of RX Antennas field) obtained from the responder.

Step 3: After completing ISS, the initiator switches to a receive mode, and the receive mode and an interval are similar to those configured in step 1.

Step 4: If the responder receives, in step 1, at least one SSW frame sent from the initiator, the responder needs to start to perform RSS based on a duration (duration) field in the corresponding SSW frame.

Step 1 and step 2 are performed at the same time, and step 3 and step 4 are performed at the same time. Step 1 and step 2 are a process of training an optimal transmit sector of the initiator, and step 3 and step 4 are a process of training an optimal transmit sector of the responder. Because the steps are in a recovery phase, the responder in step 1 or the initiator in step 3 needs to be in the quasi-omnidirectional receive mode.

If the foregoing partial SLS process is not completed within a time specified based on a "time to switch to full sweep field", the initiator and the responder perform the following complete SLS process. Related parameters have been provided in a previous negotiation process. Specifically, the complete SLS process is similar to the foregoing partial SLS process. A difference lies in that a number of sectors is a total number of sectors instead of a number of partial sectors. Details are not described again.

7. Multi-link device (multi-link device, MLD): In embodiments of this application, an IEEE 802.11 standard device that supports a plurality of links at the same time is referred to as a multi-link device.

For example, the multi-link device may be an access point multi-link device (access point MLD, AP MLD), or may be a non-access point MLD (non-AP MLD), for example, a station multi-link device (station MLD, STA MLD). It should be noted that names of the foregoing multi-link device are merely examples, and do not constitute any limitation on the protection scope of this application. For example, the AP MLD may also be referred to as a multi-link AP. Alternatively, with development of a communication technology, the AP MLD may have other names. Examples are not provided one by one for description herein.

For example, a plurality of links may be established between two multi-link devices. For example, a first communication link and a second communication link may be established between a multi-link device #1 and a multi-link device #2. The second communication link is a low-frequency communication link (for example, the first communication link operates (operation) on a frequency band (frequency band) below 7 GHz), and the first communication link is a high-frequency communication link (for example, the second communication link operates on a frequency band of 45 GHz or above).

The foregoing briefly describes, with reference to FIG. 1, a scenario to which the communication method provided in embodiments of this application can be applied, and describes basic concepts that may be used in embodiments of this application. In addition, a concept of directional communication is described in the basic concepts. Beam training needs to be performed between two communication devices, to implement directional communication.

Currently, a beam training manner includes: Two devices (for example, a device #1 and a device #2) that perform directional communication notify in advance numbers of to-be-sent PPDUs for beam training, for example, x and y. The device #1 sends x PPDUs, the device #2 sends y PPDUs, and feedback of a good beam is completed. For the device #1 and/or the device #2, in the foregoing PPDU sending process, even if a good receive beam is obtained through training, the PPDU sending process cannot be stopped. This is because a high-frequency transmitter does not leave a period of time for a peer device to return an ack frame after each PPDU is sent (which easily results in channel preemption and low efficiency).

In other words, in the foregoing beam training method, after the two devices negotiate the number of to-be-sent PPDUs for beam training, even if the good receive beam is obtained through training before the PPDUs are sent, the negotiated number of PPDUs still need to be sent, resulting in low beam training efficiency.

This application provides a communication method, to improve beam training efficiency. The following describes the communication method in detail with reference to FIG. 6.

In addition, beam maintenance and recovery defined in 802.11ay are further described in the foregoing basic concepts. In general, the foregoing solution in 802.11ay may be understood as that new beam training may be performed when a beam is lost or a beam link maintenance time expires. Beam training may be first completed with a small sweep set, to reduce overheads. If training fails, complete SLS (sweeping with a larger set) may be started. However, a problem in current beam recovery is as follows: due to a limitation that only one communication link exists between two devices, once a beam is interrupted, beam recovery needs to be attempted through SLS, resulting in low beam recovery efficiency.

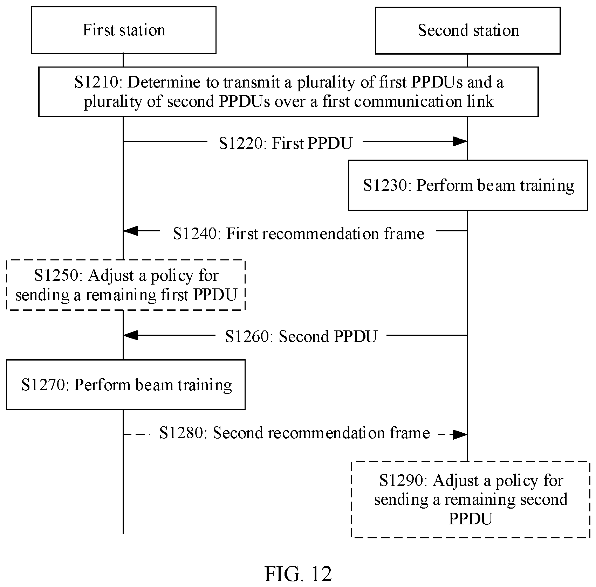

This application provides another communication method, to improve beam recovery efficiency, so as to resolve a problem in an existing beam recovery procedure. The following describes the communication method in detail with reference to FIG. 12.

The following describes the technical solutions provided in this application in detail with reference to accompanying drawings. Embodiments of this application may be applied to a plurality of different scenarios, including but not limited to the scenario shown in FIG. 1.

It should be understood that a specific structure of an entity for performing a method provided in embodiments of this application is not particularly limited in the following embodiments, provided that a program that records code of the method provided in embodiments of this application can be run to perform communication according to the method provided in embodiments of this application. For example, the entity for performing the method provided in embodiments of this application may be a receiver device or a transmitter device, or a functional module that is in a receiver device or a transmitter device and that can invoke the program and execute the program.

Without loss of generality, the following describes in detail the communication method provided in embodiments of this application by using interaction between a first station and a second station as an example. In embodiments of this application, the first station may be an access point AP, and the second station may be a non-access point non-AP (for example, a STA). Alternatively, the first station may be a non-access point AP, and the second station may be an access point STA. Alternatively, the first station and the second station are access points APs. Alternatively, the first station and the second station are non-access points non-APs.

FIG. 6 is a schematic flowchart of a communication method according to an embodiment of this application. The following steps are included.

S610: A first station and a second station determine to transmit a plurality of first PPDUs and a plurality of second PPDUs over a first communication link.

In this embodiment, the first station and the second station are the multi-link devices described above, and support a plurality of links. For example, a plurality of communication links are established between the first station and the second station. For example, the first communication link and a second communication link are established between the first station and the second station. The second communication link is a low-frequency communication link (for example, the first communication link operates on a frequency band below 7 GHz), and the first communication link is a high-frequency communication link (for example, the second communication link operates on a frequency band of 45 GHz or above). The first communication link may also be referred to as a high-frequency communication link, and the second communication link may also be referred to as a low-frequency communication link.

For example, in this embodiment, that the first station and the second station determine to transmit the plurality of first PPDUs and the plurality of second PPDUs over the first communication link may be that beam training is determined to be performed between the first station and the second station. Specifically, beam training includes: The first station needs to send, to the second station over the first communication link, the plurality of first PPDUs for beam training (for example, training a transmit beam of the first station and a receive beam of the second station), and the second station needs to send, to the first station over the first communication link, the plurality of second PPDUs for beam training (for example, training a transmit beam of the second station and a receive beam of the first station).

It should be noted that a role of the first station in a beam training process is not limited in embodiments, and the first station may be an initiator or a responder.

In a possible implementation, the first station serves as a beam training initiator, and the second station serves as a beam training responder.

In another possible implementation, the first station serves as a beam training responder, and the second station serves as a beam training initiator.

The initiator may serve as a transmitter for sending a PPDU for beam training, or may serve as a receiver for receiving a PPDU for beam training. Similarly, the responder may serve as a transmitter for sending a PPDU for beam training, or may serve as a receiver for receiving a PPDU for beam training.

In addition, it should be noted that, in this embodiment, in beam training, the initiator first sends a training beam, and then the responder sends a training beam. Alternatively, the responder first sends a training beam, and then the initiator sends a training beam. This is not limited. For example, the initiator may initiate transmission at a low frequency, but the responder first performs transmission at a high frequency. In this case, it may be understood as that the responder preferentially sends a training beam.

Specifically, before or during beam training, the first station and the second station may negotiate, over the first communication link and/or the second communication link, information about a PPDU to be sent in a beam training process. How the first station and the second station negotiate the information about the PPDU to be sent in the beam training process is not limited in embodiments.

For example, in this embodiment, the first station and the second station may negotiate, over the first communication link (namely, the high-frequency communication link), the information about the PPDU to be sent in the beam training process. For a specific negotiation process, refer to descriptions of a process in which stations negotiate related parameters in a beam training process in a current related technology (for example, negotiation in an SLS procedure). Details are not described herein again.

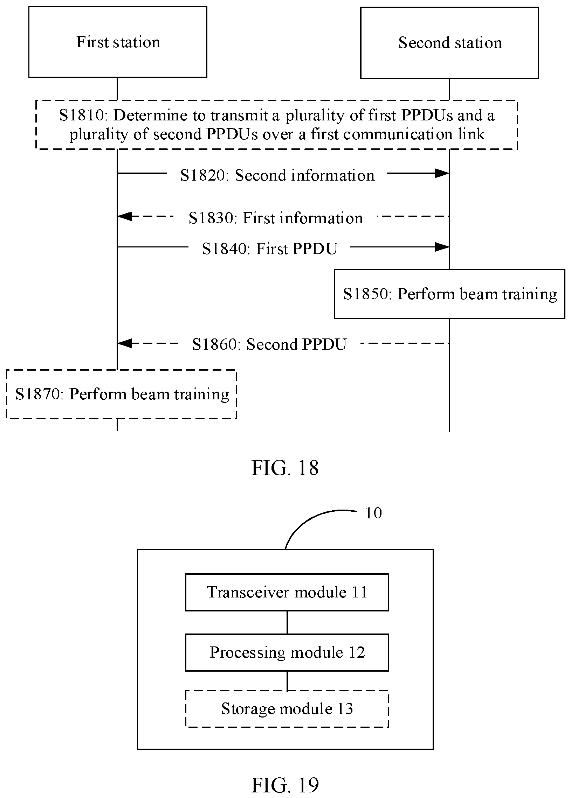

For another example, in this embodiment, because the first station and the second station are multi-link devices, the first station and the second station may negotiate, over the second communication link (namely, the low-frequency communication link), the information about the PPDU to be sent in the beam training process. For a specific negotiation process, refer to the following communication method shown in FIG. 18. That the first station and the second station negotiate the information about the PPDU is described in detail in the following embodiment shown in FIG. 12. Details are not described herein.

A specific trigger condition for determining to perform beam training between the first station and the second station over the second communication link is not limited in embodiments. For example, the beam training process may be beam training performed by the first station and the second station for beam recovery when a beam is interrupted. For another example, the beam training process may be beam training performed by the first station and the second station when a beamformed link is established.

For example, the process in which the first station and the second station perform beam training includes a partial SLS procedure, a complete SLS procedure, a BRP procedure, or the like.

Optionally, if the first station and the second station determine to perform beam training, beam training is caused due to beam interruption (or referred to as a beam failure). For example, that the first station and/or the second station determine/determines to perform beam training includes: The first station and/or the second station determine/determines that a beam for information transmission on a frequency band on which the first communication link between the first station and the second station operates fails.

For example, in this embodiment, that the first station determines beam interruption includes but is not limited to the following possible implementations:

a locally maintained beam link maintenance time of the first station expires; or
misalignment occurs in a beam obtained through beam training between the first station and the second station (for example, an SNR, an SINR, or an RSSI of a beam is excessively low), and beam training needs to be performed again; or
a PPDU loss or the like occurs when the first station and the second station perform PPDU transmission on a trained beam.

It should be noted that the foregoing manner of determining beam interruption is merely an example, and does not constitute any limitation on the protection scope of this application. The trigger condition for determining that beam training needs to be performed between the first station and the second station is not limited in embodiments.

For example, after determining to send the plurality of first PPDUs to the second station over the first communication link, the first station may send the first PPDU to the second station over the first communication link. In this case, the method procedure shown in FIG. 6 further includes the following step:

S620: The first station sends the first PPDU to the second station.

Specifically, in this embodiment, that the first station sends the first PPDU to the second station includes: The first station sends a part of the plurality of first PPDUs to the second station over the first communication link. When a remaining part of the first PPDUs are not sent, the first station receives a first stop frame from the second station.

That the first station sends the plurality of first PPDUs to the second station over the first communication link includes: In a process in which the first station sends the plurality of first PPDUs to the second station over the first communication link, the first station sends a next first PPDU after a period of time since each first PPDU is sent. No other PPDU or frame is sent within a time interval in which two adjacent first PPDUs are sent. For example, the first station sends a first PPDU #2 to the second station over the first communication link after duration #1 since the first station sends a first PPDU #1 to the second station over the first communication link. The first PPDU #1 and the first PPDU #2 are two adjacent first PPDUs in the plurality of to-be-sent first PPDUs, and the first station does not send other information to the second station over the first communication link within the duration #1.

It should be understood that if the beam training process is not interfered with, the first station sends the plurality of first PPDUs to the second station over the first communication link, the second station sends the plurality of second PPDUs to the first station over the first communication link, and feedback of a good beam is completed. In a PPDU sending process, even if the first station and/or the second station have/has obtained, through training, a beam (for example, a transmit beam and/or a receive beam) whose quality meets a preset condition (for example, an SNR, an SINR, an RSSI, or a channel meets a preset requirement; or a field such as signaling of a corresponding PPDU is successfully parsed, and cyclic redundancy check (Cyclical Redundancy Check, CRC) and frame check sequence (Frame Check Sequence, FCS) check succeed), the PPDU sending process cannot be stopped because in high-frequency communication, a transmitter of the PPDU does not leave a period of time after each PPDU is sent for a receiver to feed back an acknowledgment (Ack) frame.

In this embodiment, a stop frame may be sent over a low-frequency communication link (namely, the foregoing second communication link), so that the first station and/or the second station can actively stop the beam training process, to improve beam training efficiency. For example, the receiver has learned of a good transmit beam of the transmitter and/or has learned of a good receive beam of the receiver, and the receiver may send a stop frame to notify that sending of a PPDU for beam training over the high-frequency communication link can be stopped. The method procedure shown in FIG. 6 further includes the following steps.

S630: The second station performs beam training.

In this embodiment, the second station may perform beam training based on the received first PPDU. After the second station has obtained, through training based on the received first PPDU, a beam whose quality meets the preset condition, the second station may indicate, based on the first stop frame, the first station to stop sending the first PPDU in this embodiment.

The preset condition is not limited in embodiments. For example, the preset condition may be that an RSSI, an SNR, or an SINR is greater than a preset threshold. For another example, the preset condition may be as follows: The second station successfully parses a field such as signaling of a corresponding first PPDU, and cyclical redundancy check (Cyclical Redundancy Check, CRC) and frame check sequence (Frame Check Sequence, FCS) check succeed.

In a possible implementation, for a process in which the second station performs beam training in this embodiment, refer to a manner in which a receiver performs beam training in the conventional technology. A difference lies in that, in this embodiment, after obtaining, through training, the beam whose quality meets the preset condition, the second station may indicate, based on the first stop frame, the first station to stop sending the first PPDU.

In another possible implementation, in this embodiment, if the second station locally stores a second mapping table, and the second mapping table includes a mapping relationship between information about a transmit beam of the transmitter and information about a receive beam of the receiver, for a process in which the second station performs beam training, refer to the second mapping table.

For example, the second mapping table locally stored by the second station is shown in Table 3 below:

Table 3

| ID of the transmit beam of the transmitter | ID of the receive beam of the receiver | Related information such as an SNR and a channel |
|---|---|---|
| a | o | x |
| b | p | y |
| c | q | z |
| ... | ... | ... |

If the second station receives, over the first communication link, a first PPDU sent on a transmit beam a, the second station determines that a receive beam corresponding to the transmit beam a is a receive beam o.

It should be noted that the ID of the transmit beam and the ID of the receive beam in Table 3 use different letters, but the IDs may also be the same. For example, o in Table 3 may be equal to p. During beam training, a beam pair with good related information such as an SNR or a channel may be preferentially selected. In addition, the third column (that is, the related information such as the SNR or the channel) in Table 3 may not exist, and SNR or channel conditions from good to poor (or from poor to good) may be represented by a sequence in which beam pairs appear in the list.

S640: The second station sends the first stop frame to the first station.

The second station sends the first stop frame to the first station over the second communication link. The first stop frame indicates the first station to stop sending an unsent PPDU in the plurality of first PPDUs over the first communication link.

For example, in this embodiment, after performing beam training based on the received first PPDU to determine the transmit beam of the first station and/or the receive beam of the second station that meet/meets the preset condition, the second station may send the first stop frame to the first station over the second communication link.

A process in which the second station performs beam training based on the received first PPDU to determine the good transmit beam of the first station and/or the good receive beam of the second station is not limited in embodiments. For details, refer to descriptions of beam training performed by the receiver in the conventional technology. Alternatively, in this embodiment, before receiving the first PPDU, the second station has received, over the second communication link, information that is about a beam for sending the first PPDU and that is sent by the first station, and the second station may perform beam training based on the information about the beam for sending the first PPDU.

Specifically, when the first station serves as a transmitter to send the first PPDU for beam training to the second station, the second station serves as a receiver to receive the first PPDU. As described above, when the receiver has learned of the good transmit beam of the transmitter and/or has learned of the good receive beam of the receiver, the receiver may send the stop frame to notify that sending of the PPDU for beam training on the high-frequency communication link can be stopped. In this embodiment, when the second station has learned of the good transmit beam of the transmitter and/or has learned of the good receive beam of the receiver, the second station may send the first stop frame to the first station to notify the first station to stop sending the PPDU over the first communication link.

In this embodiment, the first station receives the first stop frame after sending a part of the first PPDUs. For example, a result of negotiation between the first station and the second station includes: The first station sends 10 first PPDUs to the second station over the first communication link, and the first station receives the first stop frame after sending five first PPDUs to the second station over the first communication link.

It should be understood that, that the frame indicating the first station to stop sending the first PPDU is referred to as the first stop frame is merely an example, and does not constitute any limitation on the protection scope of this application.

As described above, the first station may serve as the beam training initiator or the beam training responder. For example, when the first station plays different roles in the beam training process, the first station responds to the first stop frame in different manners, including but not limited to the following possible manners.

Manner 1: The first station serves as the beam training initiator. After receiving the first stop frame, the first station may stop sending a remaining to-be-sent first PPDU, and cancel receiving the second PPDU from the second station (a responder). That is, beam training is ended.

In the case shown in Manner 1, the first station determines that a plurality of second PPDUs from the second station can be received over the first communication link, and the plurality of second PPDUs are used to train a transmit beam of the second station and/or a receive beam of the first station. The first station stops, in response to the first stop frame, sending the first PPDU and cancels receiving the plurality of second PPDUs. Alternatively, the second station cancels, in response to the first stop frame, sending the plurality of second PPDUs.

For example, the second station can obtain, through training based on the received part of the first PPDUs, the transmit beam of the first station and the receive beam of the second station whose quality meets the preset condition, and can determine, based on reciprocity, the transmit beam of the second station and the receive beam of the first station whose quality meets the preset condition. Beam training may be ended based on the first stop frame.

For ease of understanding, how the first station responds to the first stop frame in the case shown in Manner 1 is described in detail with reference to FIG. 7.

In the case shown in FIG. 7, the result of negotiation between the first station and the second station is as follows: The first station is to send 10 first PPDUs (a first PPDU #1, a first PPDU #2, a first PPDU #3, ..., and a first PPDU #10) to the second station over the first communication link, and the second station is to send 10 second PPDUs (a second PPDU #1, a second PPDU #2, a second PPDU #3, ..., and a second PPDU #10) to the first station over the first communication link, to implement beam training.

After the first station sends three first PPDUs (for example, the first PPDU #1, the first PPDU #2, and the first PPDU #3 shown in FIG. 7) to the second station over the first communication link, the second station has obtained, through training based on the three first PPDUs, the transmit beam of the first station and the receive beam of the second station whose quality meets the preset condition, and can determine the transmit beam of the second station and the receive beam of the first station whose quality meets the preset condition. The second station may send the first stop frame (for example, the first stop frame shown in FIG. 7) to the first station, to indicate the first station to stop sending the first PPDU, and indicate the second station not to transmit the second PPDU. After receiving the first stop frame, the first station may stop sending the first PPDU and cancel receiving the second PPDU. In this case, beam training is ended.

Manner 2: The first station serves as the beam training initiator. After receiving the first stop frame, the first station may stop sending a remaining to-be-sent first PPDU, but still receive at least one second PPDU sent by the second station.

In the case shown in Manner 2, the first station determines that a plurality of second PPDUs from the second station can be received over the first communication link, and the plurality of second PPDUs are used to train a transmit beam of the second station and/or a receive beam of the first station. After the first station receives the first stop frame from the second station over the second communication link, the first station may further receive a part or all of the plurality of second PPDUs over the first communication link.

For example, the second station can determine the transmit beam of the first station and the receive beam of the second station based on a received part of the first PPDUs. The second station may indicate, based on the first stop frame, the first station to stop sending an unsent PPDU in the plurality of first PPDUs over the first communication link, but the beam training process is not ended. The second station may send a part or all of the plurality of second PPDUs to the first station over the first communication link, so that the first station determines the receive beam of the first station and the transmit beam of the second station based on the received second PPDU.

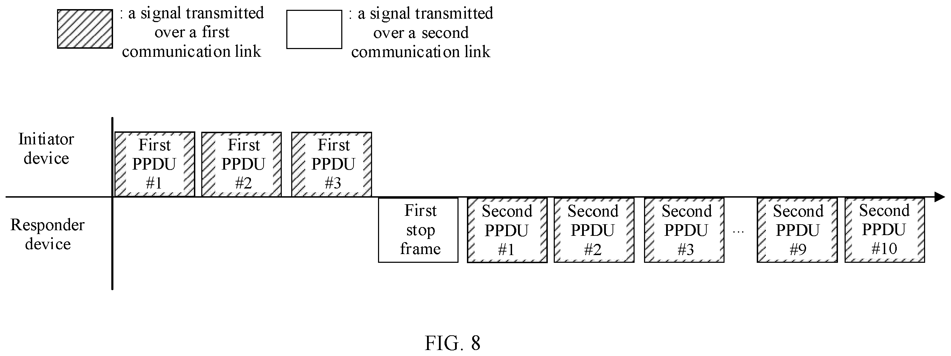

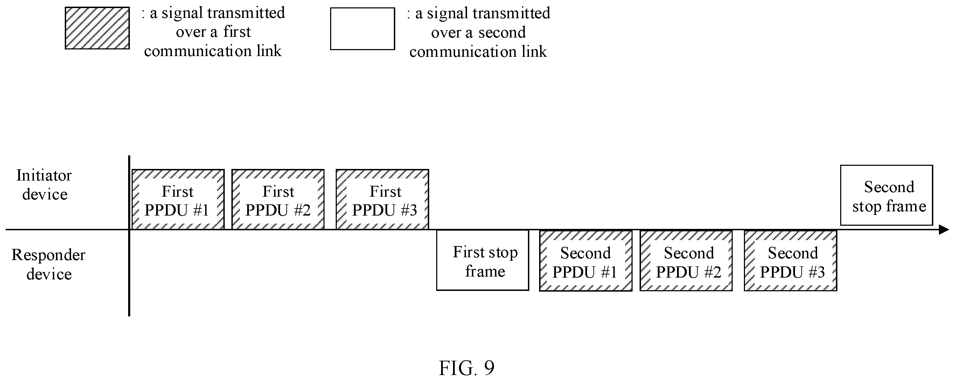

For ease of understanding, how the first station responds to the first stop frame in the case shown in Manner 2 is described in detail with reference to FIG. 8 and FIG. 9.

In the case shown in FIG. 8 and FIG. 9, the result of negotiation between the first station and the second station is as follows: The first station is to send 10 first PPDUs (a first PPDU #1, a first PPDU #2, a first PPDU #3, ..., and a first PPDU #10) to the second station over the first communication link, and the second station is to send 10 second PPDUs (a second PPDU #1, a second PPDU #2, a second PPDU #3, ..., and a second PPDU #10) to the first station over the first communication link, to implement beam training.

After the first station sends three first PPDUs (for example, the first PPDU #1, the first PPDU #2, and the first PPDU #3 shown in FIG. 8) to the second station over the first communication link, the second station has obtained, through training based on the three first PPDUs, the transmit beam of the first station and the receive beam of the second station whose quality meets the preset condition. The second station may send the first stop frame (for example, the first stop frame shown in FIG. 8) to the first station, to indicate the first station to stop sending the first PPDU. After receiving the first stop frame, the first station may stop sending the first PPDU. When the second station sends the second PPDU to the first station over the first communication link, the first station may receive the second PPDU, and perform beam training based on the second PPDU, to obtain, through training, the receive beam of the first station and the transmit beam of the second station whose quality meets the preset condition.

Optionally, FIG. 8 shows that the first station receives all of the plurality of second PPDUs sent by the second station.

Optionally, FIG. 9 shows that the first station receives a part of the plurality of second PPDUs sent by the second station.

It should be understood that, after receiving a part of the plurality of second PPDUs, if the first station can obtain, through training, the receive beam of the first station and the transmit beam of the second station whose quality meets the preset condition, the first station can indicate, based on a second stop frame, the second station to stop sending an unsent PPDU in the plurality of second PPDUs over the second communication link.

As shown in FIG. 9, after the second station sends three second PPDUs (for example, the second PPDU #1, the second PPDU #2, and the second PPDU #3 shown in FIG. 9) to the first station over the first communication link, the second station has determined, based on the three second PPDUs, information about a beam for communication between the first station and the second station. The first station may send the second stop frame (for example, the second stop frame shown in FIG. 9) to the second station, to indicate the second station to stop sending the second PPDU. After receiving the second stop frame, the second station may stop sending the second PPDU.

Optionally, that beam training is performed between the first station and the second station may be understood as performing SLS, and SLS includes an ISS phase and an RSS phase. In the case shown in Manner 2, the first stop frame may be understood as being used to stop the ISS phase and switch to the RSS phase. Optionally, in the case shown in Manner 2, the second station may notify, based on the first stop frame, information related to a time at which the second station sends the second PPDU. Alternatively, a time at which the second station is to send the second PPDU after the first stop frame is sent may be defaulted. The time at which the second station sends the second PPDU is not limited in embodiments.

Manner 3: The first station serves as the beam training responder. After receiving the first stop frame, the first station may stop sending a remaining to-be-sent first PPDU. In this case, beam training is ended.

In the case shown in Manner 3, the first station determines that a plurality of second PPDUs from the second station can be received over the first communication link, and the plurality of second PPDUs are used to train a transmit beam of the second station and/or a receive beam of the first station. Before the first station sends a part of the plurality of first PPDUs to the second station over the first communication link, the first station receives a part or all of the plurality of second PPDUs from the second station over the first communication link.

For example, the second station can determine the transmit beam of the first station and the receive beam of the second station based on the received part of the first PPDUs. Beam training may be ended based on the first stop frame.

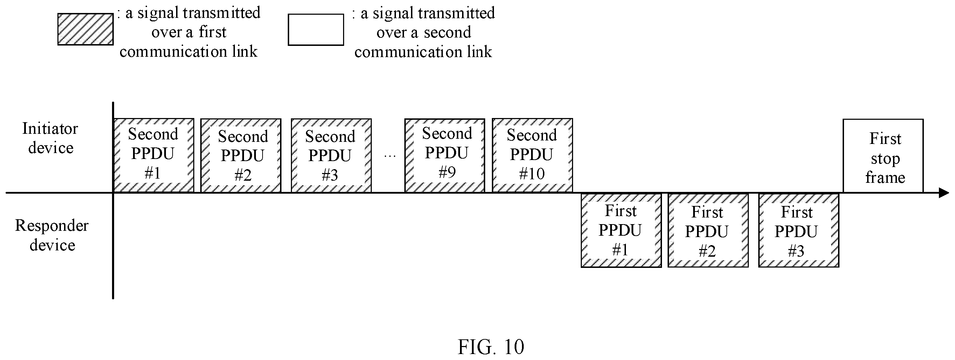

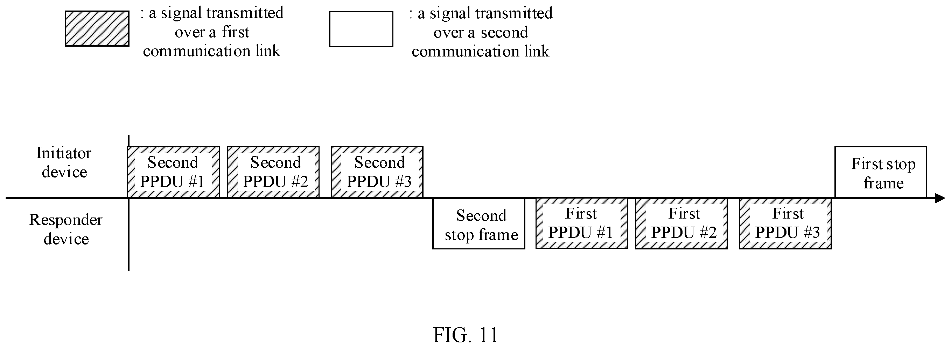

For ease of understanding, how the first station responds to the first stop frame in the case shown in Manner 3 is described in detail with reference to FIG. 10 and FIG. 11.

In the case shown in FIG. 10 and FIG. 11, the result of negotiation between the first station and the second station is as follows: The first station is to send 10 first PPDUs (a first PPDU #1, a first PPDU #2, a first PPDU #3, ..., and a first PPDU #10) to the second station over the first communication link, and the second station is to send 10 second PPDUs (a second PPDU #1, a second PPDU #2, a second PPDU #3, ..., and a second PPDU #10) to the first station over the first communication link, to implement beam training.

Optionally, FIG. 10 shows that the first station receives all of the plurality of second PPDUs sent by the second station. After the first station sends three first PPDUs (for example, the first PPDU #1, the first PPDU #2, and the first PPDU #3 shown in FIG. 10) to the second station over the first communication link, the second station has obtained, through training based on the three first PPDUs, information about a beam whose quality meets the preset condition for communication between the first station and the second station. The second station may send the first stop frame (for example, the first stop frame shown in FIG. 10) to the first station, to indicate the first station to stop sending the first PPDU. After receiving the first stop frame, the first station may stop sending the first PPDU. In this case, beam training is ended.

Optionally, after receiving a part of the plurality of second PPDUs, if the first station can obtain, through training, the receive beam of the first station and the transmit beam of the second station whose quality meets the preset condition, the first station can indicate, based on a second stop frame, the second station to stop sending an unsent PPDU in the plurality of second PPDUs over the second communication link. As shown in FIG. 11, after the second station sends three second PPDUs (for example, the second PPDU #1, the second PPDU #2, and the second PPDU #3 shown in FIG. 11) to the first station over the first communication link, the first station has obtained, through training based on the three second PPDUs, information about a beam whose quality meets the preset condition for communication between the first station and the second station. The first station may send the second stop frame (for example, the second stop frame shown in FIG. 11) to the second station, to indicate the second station to stop sending the second PPDU. After receiving the second stop frame, the second station may stop sending the second PPDU, and switch to receiving the first PPDU from the first station.

Optionally, in the case shown in Manner 3, the first station may notify, based on the second stop frame, information related to a time at which the first station sends the first PPDU. Alternatively, a time at which the first station is to send the first PPDU after the second stop frame is sent may be defaulted. The time at which the first station sends the first PPDU is not limited in embodiments.

It should be understood that in the cases shown in Manner 2 and Manner 3, the first station needs to perform beam training based on the received second PPDU. In this case, the method procedure shown in FIG. 6 may further include the following steps.

S650: The second station sends the second PPDU to the first station.

Specifically, the second station sends a part or all of the plurality of second PPDUs to the first station over the first communication link. It can be learned from the foregoing description that, after performing beam training to obtain a beam whose quality meets the preset condition, the first station may indicate, based on the second stop frame, the second station to stop sending the second PPDU. In other words, the second station may send a part of the plurality of second PPDUs.

S660: The first station performs beam training.

Specifically, the first station performs beam training based on the received part or all of the second PPDUs. Similar to beam training performed by the second station in step S630, beam training performed by the first station based on the received second PPDU in this embodiment includes but is not limited to the following two possible implementations.

In a possible implementation, for a process in which the first station performs beam training in this embodiment, refer to the manner in which the receiver performs beam training in the conventional technology. A difference lies in that, in this embodiment, after obtaining, through training, the beam whose quality meets the preset condition, the first station may indicate, based on the second stop frame, the second station to stop sending the second PPDU.

In another possible implementation, in this embodiment, if the first station locally stores a first mapping table, and the first mapping table includes a mapping relationship between information about a transmit beam of the transmitter and information about a receive beam of the receiver, for a process in which the first station performs beam training, refer to the first mapping table.

S670: The first station sends the second stop frame to the second station.

The first station sends the second stop frame to the second station over the second communication link. The second stop frame indicates the second station to stop sending an unsent second PPDU in the plurality of second PPDUs over the first communication link. Specifically, for a manner of sending the second stop frame, refer to the descriptions about sending the second stop frame in FIG. 8 to FIG. 11. Details are not described herein again.

In addition, whether the first station and/or the second station immediately stop/stops sending the PPDU after receiving the stop frame is not limited in embodiments. This is because the first station and/or the second station may need a response time to process the stop frame, and the response time may be negotiated over the second communication link.

For example, when the first station does not immediately stop sending the first PPDU after receiving the first stop frame, the unsent PPDU (for example, the unsent PPDU in the plurality of first PPDUs) may not be all remaining first PPDUs existing when the first stop frame is received. This is because the first station may still send the first PPDU when processing the first stop frame. In other words, a number of actually unsent first PPDUs may be equal to or less than a number of remaining first PPDUs that are not sent when the first stop frame is received. Similarly, when the second station does not immediately stop sending the second PPDU after receiving the second stop frame, the unsent PPDU (for example, the unsent PPDU in the plurality of second PPDUs) may not be all remaining second PPDUs existing when the second stop frame is received. This is because the second station may still send the second PPDU when processing the second stop frame. In other words, a number of actually unsent second PPDUs may be equal to or less than a number of remaining second PPDUs that are not sent when the second stop frame is received.

For example, after the first station receives the first stop frame from the second station over the second communication link, the first station stops, in response to the first stop frame after first duration, sending the unsent PPDU in the plurality of first PPDUs. The first duration may be predefined. For example, duration required for processing the first stop frame after the first station receives the first stop frame from the second communication link may be considered as the first duration. It should be noted that the first station may further continue to send the first PPDU within the first duration. Optionally, a granularity of the first duration may be a plurality of first PPDUs. For example, after receiving the first stop frame, the first station sends X first PPDUs and then stops sending the first PPDU.

For another example, after the second station receives the second stop frame from the first station over the second communication link, the second station stops, in response to the second stop frame after second duration, sending the unsent PPDU in the plurality of second PPDUs. The second duration may be predefined. For example, duration required for processing the second stop frame after the second station receives the second stop frame from the second communication link may be considered as the second duration. It should be noted that the second station may further continue to send the second PPDU within the second duration. Optionally, a granularity of the second duration may be a plurality of second PPDUs. For example, after receiving the second stop frame, the second station sends Y second PPDUs and then stops sending the second PPDU.

In addition, the stop frame may further carry other information. For example, the stop frame carries information about a beam obtained by the receiver through beam training, so that a training result does not need to be transmitted based on other signaling. This reduces signaling overheads.

Optionally, the first stop frame includes information about at least one transmit beam of the first station and/or information about at least one receive beam of the second station, and the at least one transmit beam one-to-one corresponds to (or matches) the at least one receive beam. The transmit beam and the matched (or corresponding) receive beam indicate that the transmit beam and the corresponding receive beam are a pair of beams. Information sent on the transmit beam is received on the receive beam corresponding to the transmit beam, so that a good antenna gain can be obtained.

For example, the information about the transmit beam of the first station indicates the transmit beam that is of the first station, that meets the preset requirement, and that is determined by the second station; and the information about the receive beam of the second station indicates the receive beam that is of the second station, that meets the preset requirement, and that is determined by the second station.

For example, the first stop frame may further include quality information of the at least one transmit beam of the first station and/or quality information of the at least one receive beam of the second station.

For example, the first stop frame includes an identifier of the at least one transmit beam of the first station, quality information of each transmit beam in the at least one transmit beam, the at least one receive beam of the second station, and quality information of each receive beam in the at least one receive beam.

If the second station is a responder device, the first stop frame may further include indication information indicating whether the second station subsequently sends the second PPDU.

Optionally, the second stop frame includes information about at least one receive beam of the first station and/or information about at least one transmit beam of the second station, and the at least one transmit beam one-to-one corresponds to (or matches) the at least one receive beam.

For example, the information about the transmit beam of the second station indicates the transmit beam that is of the second station, that meets the preset requirement, and that is determined by the first station; and the information about the receive beam of the first station indicates the receive beam that is of the first station, that meets the preset requirement, and that is determined by the first station.

For example, the second stop frame may further include quality information of the at least one receive beam of the first station and/or quality information of the at least one transmit beam of the second station.

For example, the second stop frame includes an identifier of the at least one transmit beam of the second station, quality information of each transmit beam in the at least one transmit beam, an identifier of the at least one receive beam of the first station, and quality information of each receive beam in the at least one receive beam.

If the first station is a responder device, the second stop frame may further include indication information indicating whether the first station subsequently sends the first PPDU.

In the communication method shown in FIG. 6, after the two multi-link devices (for example, the first station and the second station) establish a communication connection (for example, the first communication link and the second communication link are established between the first station and the second station), beam training may be performed between the first station and the second station, to obtain a good beam for information transmission. Specifically, in the technical solution, that beam training is performed between the first station and the second station includes: The first station determines to send, to the second station over the first communication link, the plurality of first PPDUs for beam training (for example, training the transmit beam of the first station and the receive beam of the second station). When the first station sends the part of the plurality of first PPDUs to the second station over the first communication link, and a remaining part of the first PPDUs are not sent, the first station receives the first stop frame from the second station over the second communication link. The first stop frame indicates the first station to stop sending the unsent PPDU in the plurality of first PPDUs over the first communication link. That is, in this technical solution, the station participating in beam training may actively stop, based on the stop frame, sending the PPDU in a beam training process. This improves beam training efficiency.

This application further provides a communication method. In a beam training process, a receiver may feed back, at a low frequency, information about a beam obtained through beam training, so that a transmitter can adjust a beam training policy based on the received beam information. The following describes the communication method in detail with reference to FIG. 12.

S1210: A first station and a second station determine to transmit a plurality of first PPDUs and a plurality of second PPDUs over a first communication link.

Refer to the description of step S610 in the communication method shown in FIG. 6. Details are not described herein again.

For example, after determining to send the plurality of first PPDUs to the second station over the first communication link, the first station may send the first PPDU to the second station over the first communication link. In this case, the method procedure shown in FIG. 12 further includes the following step:

S1220: The first station sends the first PPDU to the second station.

Specifically, in this embodiment, that the first station sends the first PPDU to the second station includes: The first station sends a part of the plurality of first PPDUs to the second station over the first communication link. When a remaining part of the first PPDUs are not sent, the first station receives a first recommendation frame from the second station. The first recommendation frame includes first beam training information obtained by the second station through beam training, and the first recommendation frame indicates the first station to adjust a policy for sending a remaining first PPDU in the plurality of first PPDUs.

In this embodiment, the first station receives the first recommendation frame after sending a part of the first PPDUs. For example, a result of negotiation between the first station and the second station includes: The first station sends 10 first PPDUs to the second station over the first communication link, and the first station receives the first recommendation frame after sending five first PPDUs to the second station over the first communication link.

It should be understood that, that the frame indicating the first station to adjust the policy for sending the remaining first PPDU in the plurality of first PPDUs is referred to as the first recommendation frame is merely an example, and does not constitute any limitation on the protection scope of this application.

It should be understood that if a beam training process is not interfered with, the first station sends the plurality of first PPDUs to the second station over the first communication link, the second station sends the plurality of second PPDUs to the first station over the first communication link, and feedback of a good beam is completed. In a PPDU sending process, even if the first station and/or the second station have/has obtained, through training, a beam/beams (for example, a transmit beam and/or a receive beam) whose quality meets a preset condition (for example, an SNR or a channel meets a preset requirement), the PPDU sending process does not change, and the beam training process is not flexible enough.

In this embodiment, a recommendation frame may be sent over a low-frequency communication link (namely, a second communication link), so that the first station and/or the second station can adjust, in a timely manner based on the received recommendation frame, sending of a PPDU in the beam training process, to improve beam training flexibility. For example, the receiver may notify, before beam training is ended, the transmitter of some beam information that has been obtained through measurement, and the receiver may send a recommendation frame to notify a beam meeting a specific condition (for example, an SNR, an RSSI, or the like is greater than a specific threshold; or the receiver successfully parses a field such as signaling of a corresponding PPDU, and cyclical redundancy check (Cyclical Redundancy Check, CRC) and frame check sequence (Frame Check Sequence, FCS) check succeed). The helps the transmitter further adjust the beam training policy when sending the PPDU. The method procedure shown in FIG. 12 further includes the following steps.

S 1230: The second station performs beam training.

Refer to the description of step S630 in the communication method shown in FIG. 6. Details are not described herein again.

S 1240: The second station sends the first recommendation frame to the first station.

The second station sends the first recommendation frame to the first station over the second communication link. The first recommendation frame indicates the first station to adjust a policy for sending an unsent PPDU in a plurality of first PPDUs.

As described above, the first station may serve as a beam training initiator or a beam training responder. For example, when the first station plays different roles in the beam training process, the first station receives the first recommendation frame in different manners, including but not limited to the following two possible manners.

Manner 4: The first station serves as the beam training initiator. After receiving the first recommendation frame, the first station adjusts the policy for sending the remaining first PPDU, and receives the second PPDU from the second station (a responder).

In the case shown in Manner 4, the first station determines that a plurality of second PPDUs from the second station can be received over the first communication link, and the plurality of second PPDUs are used to train a transmit beam of the second station and/or a receive beam of the first station. The first station adjusts, in response to the first recommendation frame, the policy for sending the unsent PPDU in the plurality of first PPDUs; and the first station receives the plurality of second PPDUs from the second station over the first communication link after transmission of the first PPDU on a first station side is ended.

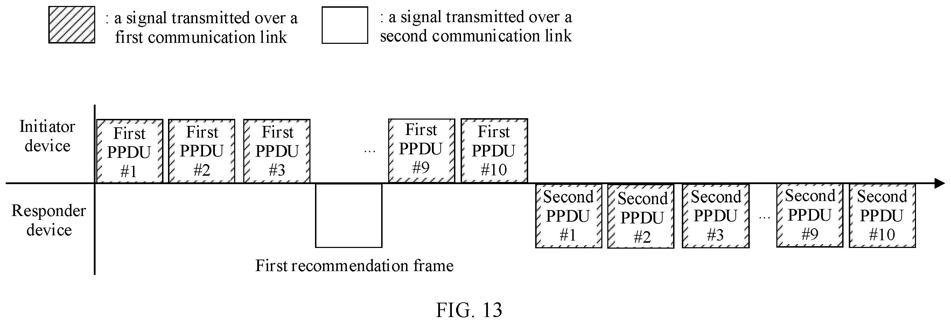

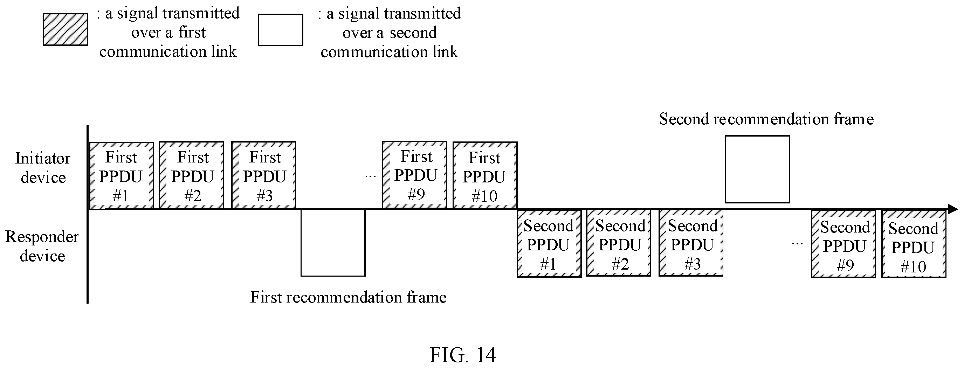

For ease of understanding, a manner of transmitting the first recommendation frame in the case shown in Manner 4 is described in detail with reference to FIG. 13 and FIG. 14.

In the case shown in FIG. 13 and FIG. 14, the result of negotiation between the first station and the second station is as follows: The first station is to send 10 first PPDUs (a first PPDU #1, a first PPDU #2, a first PPDU #3, ..., and a first PPDU #10) to the second station over the first communication link, and the second station is to send 10 second PPDUs (a second PPDU #1, a second PPDU #2, a second PPDU #3, ..., and a second PPDU #10) to the first station over the first communication link, to implement beam training.

It should be understood that, in the cases shown in FIG. 13 and FIG. 14, the first recommendation frame and/or a second recommendation frame do/does not indicate to adjust a number of PPDUs. However, this does not mean that the recommendation frame cannot be used to adjust the number of PPDUs. This is not reflected in this example.

Optionally, FIG. 13 shows that the second recommendation frame is not fed back in a process in which the first station receives all of the plurality of second PPDUs sent by the second station.

For example, after the first station sends three first PPDUs (for example, the first PPDU #1, the first PPDU #2, and the first PPDU #3 shown in FIG. 13) to the second station over the first communication link, the second station may send the first recommendation frame (for example, the first recommendation frame shown in FIG. 13) to the first station to provide beam information, so that the first station can adjust, based on the first recommendation frame, a policy for sending a subsequent first PPDU. After sending of the first PPDUs of the first station is ended, the second station sends the second PPDU to the first station.

Optionally, FIG. 14 shows that, after receiving a part of the plurality of second PPDUs sent by the second station, the first station feeds back the second recommendation frame, so that the second station can adjust, based on the second recommendation frame, a policy for sending a subsequent second PPDU.

For example, after the first station sends three first PPDUs (for example, the first PPDU #1, the first PPDU #2, and the first PPDU #3 shown in FIG. 13) to the second station over the first communication link, the second station may send the first recommendation frame (for example, the first recommendation frame shown in FIG. 13) to the first station to provide beam information, so that the first station can adjust, based on the first recommendation frame, a policy for sending a subsequent first PPDU. After sending of the first PPDUs of the first station is ended, the first station receives a part of the plurality of second PPDUs from the second station over the first communication link, and sends the second recommendation frame to the second station over the second communication link. The second recommendation frame includes second beam training information obtained by the first station through beam training.

As shown in FIG. 14, after the second station sends three second PPDUs (for example, the second PPDU #1, the second PPDU #2, and the second PPDU #3 shown in FIG. 14) to the first station over the first communication link, the first station may send the second recommendation frame (for example, the second recommendation frame shown in FIG. 14) to the second station, to indicate the second station to adjust a policy for sending a subsequent second PPDU.

Optionally, in the case shown in Manner 4, the second station may notify, based on the first recommendation frame, information related to a time at which the second station sends the second PPDU. Alternatively, a time at which the second station is to send the second PPDU after the first recommendation frame is sent may be defaulted. The time at which the second station sends the second PPDU is not limited in embodiments.

Manner 5: The first station serves as the beam training responder.

In the case shown in Manner 5, the first station determines that a plurality of second PPDUs from the second station can be received over the first communication link, and the plurality of second PPDUs are used to train a transmit beam of the second station and/or a receive beam of the first station. Before the first station sends a part of the plurality of first PPDUs to the second station over the first communication link, the first station receives the plurality of second PPDUs from the second station over the first communication link.

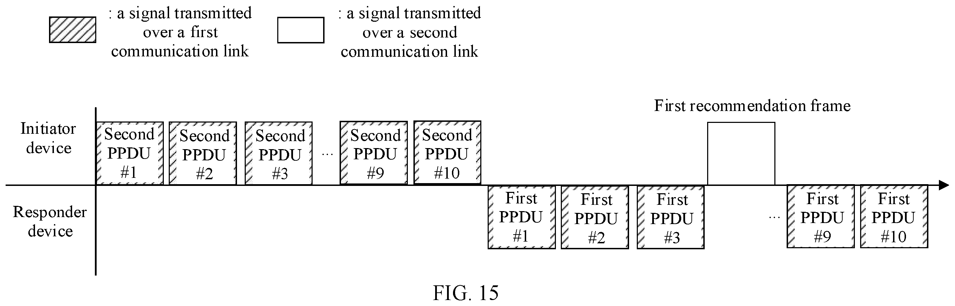

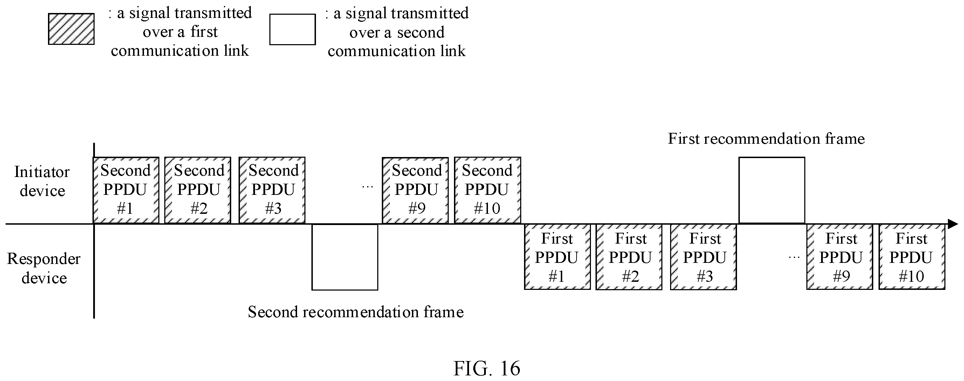

For ease of understanding, a manner of transmitting the first recommendation frame in the case shown in Manner 5 is described in detail with reference to FIG. 15 and FIG. 16.

In the case shown in FIG. 15 and FIG. 16, the result of negotiation between the first station and the second station is as follows: The first station is to send 10 first PPDUs (a first PPDU #1, a first PPDU #2, a first PPDU #3, ..., and a first PPDU #10) to the second station over the first communication link, and the second station is to send 10 second PPDUs (a second PPDU #1, a second PPDU #2, a second PPDU #3, ..., and a second PPDU #10) to the first station over the first communication link, to implement beam training.

It should be understood that, in the cases shown in FIG. 15 and FIG. 16, the first recommendation frame and/or the second recommendation frame do/does not indicate to adjust a number of PPDUs. However, this does not mean that the recommendation frame cannot be used to adjust the number of PPDUs, and does not mean that the recommendation frame cannot be used to adjust a number of PPDUs sent on a beam. This is not reflected in this example.

Optionally, FIG. 15 shows that the second recommendation frame is not fed back in a process in which the first station receives all of the plurality of second PPDUs sent by the second station.

As shown in FIG. 15, after the first station receives a plurality of second PPDUs from the second station over the first communication link, and after the first station sends three first PPDUs (for example, the first PPDU #1, the first PPDU #2, and the first PPDU #3 shown in FIG. 15) to the second station over the first communication link, the second station may send the first recommendation frame (for example, the first recommendation frame shown in FIG. 15) to the first station to provide beam information, so that the first station can adjust, based on the first recommendation frame, a policy for sending a subsequent first PPDU.

Optionally, FIG. 16 shows that, after receiving a part of the plurality of second PPDUs sent by the second station, the first station can feed back the second recommendation frame, so that the second station can adjust, based on the second recommendation frame, a policy for sending a subsequent second PPDU.

As shown in FIG. 16, after the second station sends three second PPDUs (for example, the second PPDU #1, the second PPDU #2, and the second PPDU #3 shown in FIG. 16) to the first station over the first communication link, the first station may send the second recommendation frame (for example, the second recommendation frame shown in FIG. 16) to the second station, to indicate the second station to adjust a policy for sending a subsequent second PPDU. After sending of the second PPDUs of the second station is ended, the first station sends the first PPDU to the second station.

Optionally, in the case shown in Manner 5, the first station may notify, based on the second recommendation frame, information related to a time at which the first station sends the first PPDU. Alternatively, a time at which the first station is to send the first PPDU after the second recommendation frame is sent may be defaulted. The time at which the first station sends the first PPDU is not limited in embodiments.

S1250: The first station adjusts, in response to the first recommendation frame, the policy for sending the remaining first PPDU.

Specifically, before beam training, the first station and the second station may negotiate, over the first communication link and/or the second communication link, information about a PPDU to be sent in a beam training process. How the first station and the second station negotiate, before beam training, the information about the PPDU to be sent in the beam training process is not limited in embodiments.

For example, in this embodiment, the first station and the second station may negotiate, over the first communication link (namely, the high-frequency communication link), the information about the PPDU to be sent in the beam training process. For a specific negotiation process, refer to descriptions of a process in which stations negotiate related parameters in a beam training process in a current related technology (for example, negotiation in an SLS procedure). Details are not described herein again.

For another example, in this embodiment, because the first station and the second station are multi-link devices, the first station and the second station may negotiate, over the second communication link (namely, the low-frequency communication link), the information about the PPDU to be sent in the beam training process. For a specific negotiation process, refer to the following communication method shown in FIG. 18. That the first station and the second station negotiate the information about the PPDU is described in detail in the following embodiment shown in FIG. 12. Details are not described herein.

In this embodiment, in the beam training process, the first station and/or the second station may adjust, based on the recommendation frame, a transmit beam used by the transmitter to send a PPDU.

Specifically, in this embodiment, information included in the first recommendation frame includes but is not limited to the following two possible implementations.

In a possible implementation, the first recommendation frame includes information about at least one transmit beam, meeting the preset condition, of the first station.

For example, when the second station performs beam training, the second station may notify, based on the first recommendation frame before beam training is ended, some beam training information determined by the second station. For example, when a beam measured by the second station meets a specific condition (for example, an SNR, an RSSI, or an SNR is greater than a specific threshold; or the second station successfully parses a field such as signaling of a corresponding first PPDU, and CRC and FCS check succeed), the second station may send the first recommendation frame to the first station. The first recommendation frame is used to notify related beam information, for example, a number, an SNR, an RSSI, an SINR, and channel state information that correspond to the beam meeting the condition.

In this implementation, that the first station determines, in response to the first recommendation frame, the policy for sending the remaining first PPDU in the plurality of first PPDUs includes: The first station determines, in response to the first recommendation frame, a direction of a transmit beam for sending the remaining first PPDU in the plurality of first PPDUs.

In this implementation, the information about the at least one transmit beam of the first station included in the first recommendation frame helps the first station further adjust the beam training policy when the remaining first PPDU is sent, for example, change an ID of a beam for sending the subsequent first PPDU, to implement more accurate beam training.

For ease of understanding, how the first station adjusts the beam training policy based on the first recommendation frame in this implementation is described with reference to a specific example.

Example 1

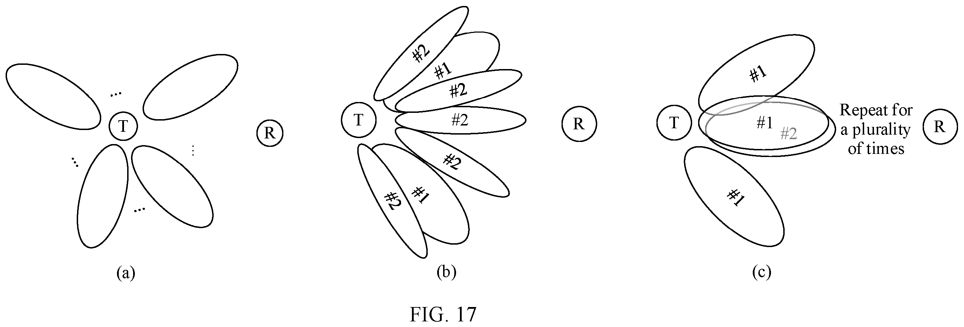

In a beam training process, if the second station does not provide, based on the first recommendation frame, the information about the at least one transmit beam, meeting the preset condition, of the first station, the first station may send a first PPDU in each direction, so that the second station can receive at least one first PPDU. As shown in (a) in FIG. 17, T in (a) in FIG. 17 represents the first station (namely, the transmitter), and R in (a) in FIG. 17 represents the second station (namely, the receiver).

If the second station provides, based on the first recommendation frame, the information about the at least one transmit beam, meeting the preset condition, of the first station, the first station may adjust a direction of the transmit beam for sending the first PPDU to a direction close to a direction of a beam meeting the preset condition, so that the second station can receive the first PPDU more efficiently. As shown in (b) in FIG. 17, #1 and #2 in (b) in FIG. 17 respectively represent directions of transmit beams used by the first station to send the first PPDUs before the first recommendation frame is received and after the first recommendation frame is received.

It can be seen from (a) and (b) in FIG. 17 that, because the first station learns of some good transmit beams based on the first recommendation frame in the beam training process, the first station may use a more suitable transmit beam to perform more accurate beam training.

In another possible implementation, the first recommendation frame includes information about a first transmit beam of the first station. The first transmit beam is a beam that is indicated by the second station and that can be used to continue to send the first PPDU.

In this implementation, that the first station determines, in response to the first recommendation frame, the policy for sending the remaining first PPDU in the plurality of first PPDUs includes: The first station determines, in response to the first recommendation frame, to send a part or all of remaining first PPDUs in the plurality of first PPDUs on the first transmit beam.

Optionally, the first station and the second station may negotiate, at a low frequency, a number of times of sending the first PPDU on the first transmit beam. For example, the second station sends third indication information to the first station over the second communication link, where the third indication information indicates the number of times of sending the first PPDU on the first transmit beam.

Optionally, the number of times of sending the first PPDU on the first transmit beam may be predefined, or the second station recommends that the first station may send the first PPDU on the first transmit beam for a specific number of additional times.

For ease of understanding, how the first station adjusts the beam training policy based on the first recommendation frame in this implementation is described with reference to a specific example.

Example 2

In a beam training process, if the second station does not provide information about a first transmit beam based on the first recommendation frame, the first station may send a first PPDU in each direction, so that the second station can receive at least one first PPDU, as shown in (a) in FIG. 17.

If the second station provides information about a first transmit beam based on the first recommendation frame, the first station may repeatedly send the first PPDU on the first transmit beam, so that the second station can perform receive beam training more efficiently. As shown in (c) in FIG. 17, #1 and #2 in (c) in FIG. 17 respectively represent directions of transmit beams used by the first station to send the first PPDUs before the first recommendation frame is received and after the first recommendation frame (for example, the first recommendation frame carries information about a beam #2) is received.

For example, in this embodiment, the first station needs to perform beam training based on the received second PPDU. The method procedure shown in FIG. 12 may further include the following steps.

S1260: The second station sends the second PPDU to the first station.

Specifically, the second station sends the plurality of second PPDUs to the first station over the first communication link. It can be learned from the foregoing description that the first station may indicate, based on the second recommendation frame, the second station to adjust a transmit beam for sending the second PPDU.

S 1270: The first station performs beam training.

Refer to the description of step S660 in the communication method shown in FIG. 6. Details are not described herein again.

S1280: The first station sends the second recommendation frame to the second station.

The first station sends the second recommendation frame to the second station over the second communication link. The second recommendation frame indicates the second station to adjust a transmit beam for sending an unsent second PPDU in the plurality of second PPDUs. Specifically, for a manner of sending the second recommendation frame, refer to the descriptions about sending the second recommendation frame in FIG. 13 to FIG. 16. Details are not described herein again.

S1290: The second station adjusts, in response to the second recommendation frame, a policy for sending a remaining second PPDU.

Specifically, in this embodiment, information included in the second recommendation frame includes but is not limited to the following two possible implementations.

In a possible implementation, the second recommendation frame includes information about at least one transmit beam, meeting the preset condition, of the second station.

For example, when the first station performs beam training, the first station may notify, based on the second recommendation frame before beam training is ended, some beam training information determined by the first station. For example, when a beam measured by the first station meets a specific condition (for example, an SNR, an RSSI, or an SNR is greater than a specific threshold; or the first station successfully parses a field such as signaling of a corresponding second PPDU, and CRC and FCS check succeed), the first station may send the second recommendation frame to the second station. The second recommendation frame is used to notify related beam information, for example, a number, an SNR, an RSSI, an SINR, and channel state information that correspond to the beam meeting the condition.

In this implementation, that the second station determines, in response to the second recommendation frame, the policy for sending the remaining second PPDU in the plurality of second PPDUs includes: The second station determines, in response to the second recommendation frame, a direction of a transmit beam for sending the remaining second PPDU in the plurality of second PPDUs.

In this implementation, the information about the at least one transmit beam of the second station included in the second recommendation frame helps the second station further adjust the beam training policy when the remaining second PPDU is sent, for example, change an ID of a beam for sending the subsequent second PPDU, to implement more accurate beam training.

In another possible implementation, the second recommendation frame includes information about a second transmit beam of the second station. The second transmit beam is a beam that is indicated by the first station and that can be used to continue to send the second PPDU.

In this implementation, that the second station determines, in response to the second recommendation frame, the policy for sending the remaining second PPDU in the plurality of second PPDUs includes: The second station determines, in response to the second recommendation frame, to send a part or all of remaining second PPDUs in the plurality of second PPDUs on the second transmit beam.

Optionally, the first station and the second station may negotiate, at a low frequency, a number of times of sending the second PPDU on the second transmit beam. For example, the first station sends fourth indication information to the second station over the second communication link, where the fourth indication information indicates the number of times of sending the second PPDU on the second transmit beam.

Optionally, the number of times of sending the second PPDU on the second transmit beam may be predefined, or the first station recommends that the second station may send the second PPDU on the second transmit beam for a specific number of additional times.

In the communication method shown in FIG. 12, when the first station sends the part of the plurality of first PPDUs to the second station over the first communication link, and a remaining part of the first PPDUs are not sent (or in the beam training process, that is, beam training is not ended), the first station receives the first recommendation frame from the second station over the second communication link. The first recommendation frame includes beam information obtained by the second station through beam training based on the received part of the first PPDUs. Notification of the beam information helps the first station further adjust the beam training policy based on the beam information when sending the remaining first PPDU, to improve beam training accuracy.

It should be noted that the stop frame shown in FIG. 6 and the recommendation frame shown in FIG. 12 may be different capabilities of a same frame. For example, when the second station sends a frame #1 to the first station, and the frame #1 includes information about a transmit beam, meeting the preset condition, of the first station, the first station may stop, in response to the frame #1, sending the first PPDU (which is equivalent to receiving the first stop frame), or the first station may adjust, in response to the frame #1, a transmit beam for subsequently sending the first PPDU (which is equivalent to receiving the first recommendation frame).

It should be further noted that the communication method shown in FIG. 6 and the communication method shown in FIG. 12 may be used together. For example, after sending the first recommendation frame, the second station may further send the first stop frame. A specific combination manner is not limited in this application.

In addition, the process of sending the stop frame shown in FIG. 6 and the process of sending the recommendation frame shown in FIG. 12 may be understood as a renegotiation process or a recommendation process. The renegotiation process may be understood as changing negotiated parameters based on the stop frame and/or the recommendation frame after negotiation. The recommendation process may be understood as recommending, based on the stop frame and/or the recommendation frame after negotiation, that the transmitter change the negotiated parameters. For example, the devices may perform renegotiation in the beam training process, and adjust various parameters in a negotiated beam training procedure, for example, related parameters such as a time-related parameter, a number of times of sending a PPDU, and a transmit beam. If the time parameter or the number of times of sending the PPDU changes, the original beam training procedure may change (for example, duration required for beam training changes). For example, the stop frame and/or the recommendation frame may be understood as content of renegotiation or recommendation. That is, sending a frame indicates stopping of a phase or entire beam training. For another example, the renegotiation process or the recommendation process is presented through interaction between the two devices. For example, the responder sends the first recommendation frame; and the transmitter feeds back a first recommendation acknowledgment frame in response to the first recommendation frame, or the transmitter may reject recommendation of the first recommendation frame, and perform recommendation again. For another example, the responder sends the first stop frame; and the transmitter feeds back a first stop acknowledgment frame in response to the first stop frame, or the transmitter may reject recommendation of the first stop frame, and perform recommendation again.

For example, if there are one initiator and a plurality of responders, the initiator may further notify new beam training-related information in a broadcast manner or a one-to-one notification manner, so that each device learns of a corresponding change.

This application further provides a communication method. During beam training, information about a beam for sending a PPDU is negotiated over a low-frequency communication link, to improve beam training efficiency. The following describes the communication method in detail with reference to FIG. 18.

FIG. 18 is a schematic flowchart of a communication method according to an embodiment of this application. The following steps are included.

In this embodiment, during beam training between a first station and a second station, information about a beam for sending a PPDU may be negotiated over a second communication link. Specifically, that the first station and the second station negotiate the information about the beam for sending the PPDU includes:

S1820: The first station sends second information to the second station.

The second information includes information about a plurality of transmit beams for sending a plurality of first PPDUs.

For example, a sequence of the information about the plurality of transmit beams for the plurality of first PPDUs one-to-one corresponds to a sequence of the plurality of first PPDUs. For example, a sequence of the plurality of first PPDUs is a first PPDU #1, a first PPDU #2, ..., and a first PPDU #N, and the sequence of the information about the plurality of transmit beams is information about a transmit beam for the first PPDU #1, information about a transmit beam for the first PPDU #2, ..., and information about a transmit beam for the first PPDU #N.

For example, in this embodiment, the first station and the second station may negotiate, after determining that a plurality of first PPDUs and a plurality of second PPDUs need to be transmitted between the first station and the second station over a first communication link, that is, after determining to perform beam training, the information about the beam for sending the PPDU; or the information about the beam for sending the PPDU may be negotiated before it is determined to perform beam training. Optionally, the method procedure shown in FIG. 18 may further include the following steps.

S1810: The first station and the second station determine to transmit the plurality of first PPDUs and the plurality of second PPDUs over the first communication link.

Refer to the description of step S610 in the communication method shown in FIG. 6. Details are not described herein again.

In this embodiment, the information about the beam may be understood as information for representing the beam, and includes but is not limited to information that can represent a parameter of the beam, such as information about a radio frequency chain, information about an antenna, information about a sector, and information about an antenna weight vector. For example, the second information includes at least one of the following information:

an identifier, a radio frequency chain identifier, an antenna identifier, a sector identifier, a count identifier, or an antenna weight vector identifier of the beam for sending the first PPDU.

Optionally, the second information may further include information indicating whether the second station receives the first PPDU in a quasi-omnidirectional mode.

Optionally, the second information may further include information such as a number of first PPDUs, a start moment of sending the first PPDU, transmission duration of the first PPDU, or an interval in which two adjacent first PPDUs are sent.

For ease of understanding, content included in the second information is described with reference to a specific example.

Example 3

The first station sends 10 first PPDUs (a first PPDU #1, a first PPDU #2, a first PPDU #3, ..., and a first PPDU #10) to the second station over the first communication link, and the second information includes information related to beams for sending the 10 first PPDUs.

For example, the second information includes an ID, a radio frequency chain ID, an antenna ID, a sector ID, and an antenna weight vector ID of a transmit beam for sending the first PPDU #1. In addition, the second information may further include information indicating whether the second station receives the first PPDU #1 in the quasi-omnidirectional mode.

The second information includes an ID, a radio frequency chain ID, an antenna ID, a sector ID, and an antenna weight vector ID of a transmit beam for sending the first PPDU #2. In addition, the second information may further include information indicating whether the second station receives the first PPDU #2 in the quasi-omnidirectional mode. For the other first PPDUs (the first PPDU #3, ..., and the first PPDU #10), information included in the second information is similar to the information about the beam for the first PPDU #1 and the information about the beam for the first PPDU #2 that are included in the second information. Details are not described herein again.

The second information may be used to notify information related to a beam for each first PPDU for beam training, so that the second station can better train a receive beam of the second station and/or a transmit beam of the first station.

The second station may learn in advance of the information related to the beam for sending the first PPDU at a moment, for example, a sector direction. Therefore, the second station can directly start directional receive beam training at the corresponding moment; or perform quasi-omnidirectional receive beam training, and then perform directional receive beam training, to improve beam training efficiency.

In addition, second training fields may be allowed to exist in one or more first PPDUs sent by the first station in the foregoing beam training process, to perform beam training more efficiently.

For ease of understanding, the following uses an example in which a second training field exists in a first PPDU for description. For example, the second training field existing in the first PPDU can improve beam training efficiency from the following two aspects:

In a possible implementation, the second training field may be sent on the beam for sending the first PPDU.

For example, the second training field exists in the first PPDU #1, the transmit beam for sending the first PPDU #1 is a beam #1, and the second training field may be sent on the beam #1 for N times, where N is a positive integer.

In this implementation, the first PPDU and the second training field of the first PPDU may be sent on the same beam, to help the second station perform beam training more efficiently. For example, for a same transmit beam of the first station, the second station has a plurality of good matched receive beams. In this case, testing of the plurality of receive beams may be completed in a same PPDU.

In another possible implementation, the second training field may be sent on a beam other than the beam for sending the first PPDU.

For example, the second training field exists in the first PPDU #1, a transmit beam for sending the first PPDU #1 is a beam #1, and the second training field may be sent on a beam other than the beam #1. For example, the second training field is sent on a beam #2, a beam #3, or a beam #4.

In this implementation, the first station may have a plurality of transmit beams corresponding to a same PPDU, to help the second station perform beam training more efficiently. For example, the second station may test more receive beams in a same PPDU.

Optionally, the second training field may be a long training field.

It should be understood that second training fields existing in different first PPDUs may be different. For example, a second training field #1 existing in the first PPDU #1 is sent on a beam for sending the first PPDU #1, and a second training field #2 existing in the first PPDU #2 is sent on a beam other than a beam for sending the first PPDU #1.

For example, when the second training field exists in the first PPDU, the first station may notify, over the second communication link, a number of times of sending the second training field and/or information about a beam for sending the second training field.

The first station sends second indication information to the second station over the second communication link, where the second indication information indicates a number of times that the second training field is sent on the beam for sending the first PPDU, or the second indication information indicates a beam for sending the second training field. For example, the second indication information indicates information about the beam for sending the second training field. For example, the second indication information indicates a number of transmit sectors, a number of repetitions, and information about an ID of the beam for sending the second training field.

In a possible implementation, if the second training field is sent on the beam for sending the first PPDU, the first station may indicate the number N of sending times based on the second indication information.

In another possible implementation, if the second training field is sent on the beam other than the beam for sending the first PPDU, the first station may indicate the beam for sending the second training field based on the second indication information.

For example, when the second training field exists in the first PPDU, configurations such as a parameter, a direction, and a number of beams for sending the second training field may be adjusted with reference to the PPDU transmission adjustment manner (for example, adjusting configurations such as a parameter, a direction, or a number of beams for sending a PPDU) shown in FIG. 6 and/or FIG. 12 above. It may be understood that the PPDU transmission adjustment solution (for example, stopping sending a PPDU and/or adjusting a parameter for transmitting a PPDU) mentioned above may be applied to adjustment of a parameter of a training field.

In addition, it should be noted that, in the beam training process, the second station needs to send a plurality of second PPDUs for beam training to the first station. Information about a beam for sending the second PPDU by the second station may also be negotiated over the second communication link, to improve beam training efficiency. In this way, the communication method shown in FIG. 18 may further include the following step.

S1830: The second station sends first information to the first station.

The first information includes information about a plurality of beams for sending the plurality of second PPDUs.

For example, a sequence of the information about the plurality of transmit beams for the plurality of second PPDUs one-to-one corresponds to a sequence of the plurality of second PPDUs. For example, the sequence of the plurality of second PPDUs is a second PPDU #1, a second PPDU #2, ..., and a second PPDU #M, and the sequence of the information about the plurality of transmit beams is information about a transmit beam for the second PPDU #1, information about a transmit beam for the second PPDU #2, ..., and information about a transmit beam for the second PPDU #M.

For example, the first information includes at least one of the following information:

an identifier, a radio frequency chain identifier, an antenna identifier, a sector identifier, a count identifier, or an antenna weight vector identifier of the beam for sending the second PPDU.

Optionally, the first information may further include information indicating whether the first station receives the second PPDU in a quasi-omnidirectional mode.

Optionally, the first information may further include information such as a number of second PPDUs, a start moment of sending the second PPDU, transmission duration of the second PPDU, or an interval in which two adjacent second PPDUs are sent.

For ease of understanding, content included in the first information is described with reference to a specific example.


Example 4

The second station sends 10 second PPDUs (a second PPDU #1, a second PPDU #2, a second PPDU #3, ..., and a second PPDU #10) to the first station over the first communication link, and the first information includes information related to beams for sending the 10 second PPDUs.

For example, the first information includes an ID, a radio frequency chain ID, an antenna ID, a sector ID, and an antenna weight vector ID of a transmit beam for sending the second PPDU #1. In addition, the first information may further include information indicating whether the first station receives the second PPDU #1 in the quasi-omnidirectional mode.

The first information includes an ID, a radio frequency chain ID, an antenna ID, a sector ID, and an antenna weight vector ID of a transmit beam for sending the second PPDU #2. In addition, the first information may further include information indicating whether the first station receives the second PPDU #2 in the quasi-omnidirectional mode. For the other second PPDUs (the second PPDU #3, ..., and the second PPDU #10), information included in the first information is similar to the information about the beam for the second PPDU #1 and the information about the beam for the second PPDU #2 that are included in the first information. Details are not described herein again.

The first information may be used to notify information related to a beam for each second PPDU for beam training, so that the first station can better train a receive beam of the first station and/or a transmit beam of the second station. The first station may learn in advance of the information related to the beam for sending the second PPDU at a moment, for example, a sector direction. Therefore, the first station can directly start directional receive beam training at the corresponding moment; or perform quasi-omnidirectional receive beam training, and then perform directional receive beam training, to improve beam training efficiency.

In addition, first training fields (Training Fields) may be allowed to exist in one or more second PPDUs sent by the second station in the foregoing beam training process, to perform beam training more efficiently.

For ease of understanding, the following uses an example in which a first training field exists in a second PPDU for description. For example, the first training field existing in the second PPDU can improve beam training efficiency from the following two aspects:

In a possible implementation, the first training field may be sent on the beam for sending the second PPDU.

For example, the first training field exists in the second PPDU #1, the transmit beam for sending the second PPDU #1 is a beam #a, and the first training field may be sent on the beam #a for M times, where M is a positive integer.

In this implementation, the second PPDU and the first training field of the second PPDU may be sent on the same beam, to help the first station perform beam training more efficiently. For example, for a same transmit beam of the second station, the first station has a plurality of good matched receive beams. In this case, testing of the plurality of receive beams may be completed in a same PPDU.

In another possible implementation, the first training field may be sent on a beam other than the beam for sending the second PPDU.

For example, the first training field exists in the second PPDU #1, a transmit beam for sending the second PPDU #1 is a beam #1, and the first training field may be sent on a beam other than the beam #1. For example, the first training field is sent on a beam #2, a beam #3, or a beam #4.

In this implementation, the second station may have a plurality of transmit beams corresponding to a same PPDU, to help the first station perform beam training more efficiently. For example, the first station may test more receive beams in a same PPDU.

Optionally, the first training field may be a long training field.

It should be understood that first training fields existing in different second PPDUs may be different. For example, a first training field #1 existing in the second PPDU #1 is sent on a beam for sending the second PPDU #1, and a first training field #2 existing in the second PPDU #2 is sent on a beam other than a beam for sending the second PPDU #2.

For example, when the first training field exists in the second PPDU, the second station may notify, over the second communication link, a number of times of sending the first training field and/or information about a beam for sending the first training field.

The second station sends first indication information to the first station over the second communication link, where the first indication information indicates a number of times that the first training field is sent on the beam for sending the second PPDU, or the first indication information indicates a beam for sending the first training field. For example, the first indication information indicates information about the beam for sending the first training field. For example, the first indication information indicates a number of transmit sectors, a number of repetitions, and information about an ID of the beam for sending the first training field.

In a possible implementation, if the first training field is sent on the beam for sending the second PPDU, the second station may indicate the number M of sending times based on the first indication information.

In another possible implementation, if the first training field is sent on the beam other than the beam for sending the second PPDU, the second station may indicate the beam for sending the first training field based on the first indication information.

For example, when the first training field exists in the second PPDU, configurations such as a parameter, a direction, and a number of beams for sending the first training field may be adjusted with reference to the PPDU transmission adjustment manner (for example, adjusting configurations such as a parameter, a direction, or a number of beams for sending a PPDU) shown in FIG. 6 and/or FIG. 12 above. It may be understood that the PPDU transmission adjustment solution (for example, stopping sending a PPDU and/or adjusting a parameter for transmitting a PPDU) mentioned above may be applied to adjustment of a parameter of a training field.

It should be understood that an occasion on which the first station and the second station negotiate the information about the beam for sending the PPDU in the beam training process is not limited in embodiments. Negotiation may be performed after it is determined that beam training needs to be performed, or may be performed before it is determined that beam training needs to be performed. For example, after a beam for information transmission on a frequency band on which the first communication link between the first station and the second station operates fails, the first station and the second station may negotiate the information about the beam for sending the PPDU in the beam training process over the second communication link.

Further, after sending the second information to the second station, the first station may send a part or all of the plurality of first PPDUs to the second station based on the second information over the first communication link. In this case, the method procedure shown in FIG. 12 further includes the following steps:
S1840: The first station sends the first PPDU to the second station.

Specifically, the first station sends a part or all of the plurality of first PPDUs to the second station over the first communication link.

In a possible implementation, the first station sends all of the plurality of first PPDUs to the second station over the first communication link.

In this implementation, after the first station and the second station negotiate the information about the beam for sending the PPDU in the beam training process, a process of sending the PPDU between the first station and the second station is similar to sending a PPDU in a beam training process in the conventional technology.

For example, the first station sends the plurality of first PPDUs to the second station over the first communication link. A difference lies in that, in this embodiment, the first station and the second station negotiate the information about the beam for sending the PPDU in the beam training process, so that the second station can perform receiving based on the information, negotiated in advance, about the beam for sending the PPDU, thereby improving beam training efficiency.

In another possible implementation, the first station sends the part of the plurality of first PPDUs to the second station over the first communication link.

In this implementation, after the first station and the second station negotiate the information about the beam for sending the PPDU in the beam training process, for a process in which the first station sends the first PPDU, refer to sending the first PPDU shown in the communication method shown in FIG. 6. To be specific, after performing beam training to obtain a beam whose quality meets a preset condition, based on a first stop frame, the second station may indicate the first station to stop sending the first PPDU, or indicate that the beam training process is ended. For a specific indication manner, refer to the descriptions in the communication method shown in FIG. 6. Details are not described herein again. Alternatively, for a process in which the first station sends the first PPDU, refer to sending the first PPDU in the communication method shown in FIG. 12. To be specific, the second station may indicate, based on a first recommendation frame, the first station to adjust a policy for sending the first PPDU.

S1850: The second station performs beam training.

Specifically, for a process in which the second station performs beam training, refer to the descriptions about beam training performed by the second station in the embodiment shown in FIG. 6. Details are not described herein again.

S1860: The second station sends the second PPDU to the first station.

Specifically, the second station sends a part or all of the plurality of second PPDUs to the first station over the first communication link.

In a possible implementation, the second station sends all of the plurality of second PPDUs to the first station over the first communication link.

In this implementation, after the first station and the second station negotiate the information about the beam for sending the PPDU in the beam training process, a process of sending the PPDU between the first station and the second station is similar to sending a PPDU in a beam training process in the conventional technology.

For example, the second station sends the plurality of second PPDUs to the first station over the first communication link. A difference lies in that, in this embodiment, the first station and the second station negotiate the information about the beam for sending the PPDU in the beam training process, so that the first station can perform receiving based on the information, negotiated in advance, about the beam for sending the PPDU, thereby improving beam training efficiency.

In another possible implementation, the second station sends the part of the plurality of second PPDUs to the first station over the first communication link.

In this implementation, after the first station and the second station negotiate the information about the beam for sending the PPDU in the beam training process, for a process in which the second station sends the second PPDU, refer to sending the second PPDU shown in the communication method shown in FIG. 6. To be specific, after performing beam training to obtain a beam whose quality meets a preset condition, based on a second stop frame, the first station may indicate the second station to stop sending the second PPDU, or indicate that the beam training process is ended. For a specific indication manner, refer to the descriptions in the communication method shown in FIG. 6. Details are not described herein again. Alternatively, for a process in which the second station sends the second PPDU, refer to sending the second PPDU in the communication method shown in FIG. 12. To be specific, the first station may indicate, based on a second recommendation frame, the second station to adjust a policy for sending the second PPDU.

S1870: The first station performs beam training.

Specifically, for a process in which the first station performs beam training, refer to the descriptions about beam training performed by the first station in the embodiment shown in FIG. 6. Details are not described herein again.

It should be understood that, if the first station serves as a beam training initiator, the second station serves as a beam training responder. Steps S1840 and S1850 are performed before steps S1860 and S1870. To be specific, the first station as the initiator first sends the first PPDU to the second station over the first communication link, and then, the second station sends the second PPDU to the first station over the first communication link.

If the first station serves as a beam training responder, the second station serves as a beam training initiator. Steps S1860 and S1870 are performed before steps S1840 and S1850. To be specific, the second station as the initiator first sends the second PPDU to the first station over the first communication link, and then, the first station sends the first PPDU to the second station over the first communication link.

In the communication method shown in FIG. 18, after two multi-link devices (for example, the first station and the second station) establish a communication connection (for example, the first communication link and the second communication link are established between the first station and the second station), beam training may be performed between the first station and the second station, to obtain a good beam for information transmission. Specifically, in the technical solution, that beam training is performed between the first station and the second station includes: The first station determines to send, to the second station over the first communication link, the plurality of first PPDUs for beam training (for example, training the transmit beam of the first station and the receive beam of the second station). Before the first station sends the part or all of the plurality of first PPDUs to the second station over the first communication link, information about a beam for sending a PPDU in a beam training process may be negotiated over the second communication link, so that a receiver can receive the PPDU based on the information about the beam for sending the PPDU. This improves receiving efficiency of the receiver, and further improves beam training efficiency.

It should be understood that sequence numbers of the foregoing processes do not mean execution sequences. The execution sequence of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, the first station and the second station) may alternatively be implemented by a component (for example, a chip or a circuit) of the device.

It may be further understood that some optional features in embodiments of this application may be independent of other features in some scenarios, or may be combined with other features in some scenarios. This is not limited.

The foregoing describes in detail the communication methods provided in embodiments of this application with reference to FIG. 6, FIG. 12, and FIG. 18. The foregoing communication method is mainly described from perspectives of the first station and the second station. It may be understood that, to implement the foregoing functions, the first station and the second station include corresponding hardware structures and/or software modules for performing the functions.

A person skilled in the art should be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of this application.

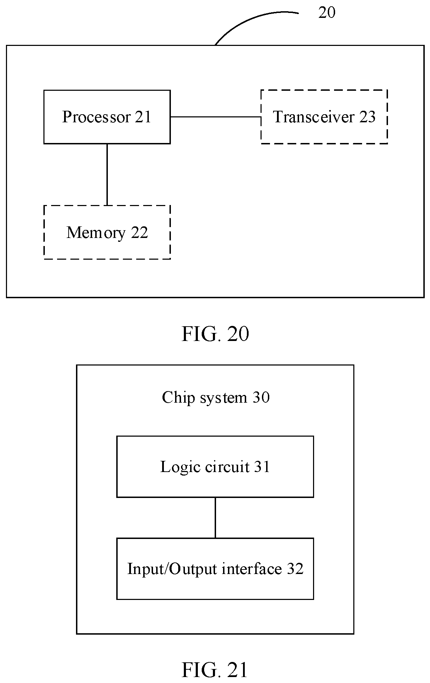

The following describes in detail communication apparatuses provided in embodiments of this application with reference to FIG. 19 and FIG. 21. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logic function division. In actual implementation, there may be another division manner. Descriptions are provided below by using an example in which each functional module is obtained through division based on each corresponding function.

FIG. 19 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the first station in the foregoing method embodiment, or may be a component (for example, a chip) of the first station.

The apparatus 10 may implement corresponding steps or procedures performed by the first station in the foregoing method embodiment. The transceiver module 11 may be configured to perform receiving and sending-related operations of the first station in the foregoing method embodiment, and the processing module 12 may be configured to perform a processing-related operation of the first station in the foregoing method embodiment.

In a possible implementation, the processing module 12 is configured to determine to send a plurality of first physical layer protocol data units PPDUs to a second station over a first communication link, where the plurality of first PPDUs are used to train a transmit beam of the first station and/or a receive beam of the second station. The transceiver module 11 is configured to send a part of the plurality of first PPDUs to the second station over the first communication link. The transceiver module 11 is further configured to receive a first stop frame from the second station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

In another possible implementation, the processing module 12 is configured to determine to send a plurality of first physical layer protocol data units PPDUs to a second station over a first communication link, where the plurality of first PPDUs are used to train a transmit beam of the first station and/or a receive beam of the second station. The transceiver module 11 is configured to send second information to the second station over a second communication link, where the second information includes information about a plurality of transmit beams for sending the plurality of first PPDUs. The transceiver module 11 is further configured to send a part or all of the plurality of first PPDUs to the second station over the first communication link. The first station and the second station are multi-link devices, and a frequency band on which the first communication link operates is higher than a frequency band on which the second communication link operates.

In another possible implementation, the processing module 12 is configured to determine to send a plurality of first physical layer protocol data units PPDUs to a second station over a first communication link, where the plurality of first PPDUs are used to train a transmit beam of the first station and/or a receive beam of the second station. The transceiver module 11 is configured to send a part of the plurality of first PPDUs to the second station over the first communication link.

The transceiver module 11 is further configured to receive a first recommendation frame from the second station over a second communication link, where the first recommendation frame includes first beam training information obtained by the second station through beam training. The processing module 12 is further configured to determine, in response to the first recommendation frame, a policy for sending a remaining first PPDU in the plurality of first PPDUs. The first station and the second station are multi-link devices, and a frequency band on which the first communication link operates is higher than a frequency band on which the second communication link operates.

When the apparatus 10 is configured to perform the method in FIG. 6, the transceiver module 11 may be configured to perform steps of receiving and sending information in the method, for example, steps S620, S640, S650, and S670; and the processing module 12 may be configured to perform a processing step in the method, for example, steps S610 and S660.

When the apparatus 10 is configured to perform the method in FIG. 12, the transceiver module 11 may be configured to perform steps of receiving and sending information in the method, for example, steps S1220, S1240, S1260, and S1280; and the processing module 12 may be configured to perform a processing step in the method, for example, steps S1250 and S1270.

When the apparatus 10 is configured to perform the method in FIG. 18, the transceiver module 11 may be configured to perform steps of receiving and sending information in the method, for example, steps S1820, S1830, S1840, and S1860; and the processing module 12 may be configured to perform a processing step in the method, for example, steps S1850 and S1870.

It should be understood that a specific process in which the units perform the foregoing corresponding steps is described in detail in the foregoing method embodiment. For brevity, details are not described herein.

In another design, the apparatus 10 may correspond to the second station in the foregoing method embodiment, or may be a component (for example, a chip) of the second station.

The apparatus 10 may implement corresponding steps or procedures performed by the second station in the foregoing method embodiment. The transceiver module 11 may be configured to perform receiving and sending-related operations of the second station in the foregoing method embodiment, and the processing module 12 may be configured to perform a processing-related operation of the second station in the foregoing method embodiment.

In a possible implementation, the processing module 12 is configured to determine to receive a plurality of first physical layer protocol data units PPDUs from a first station over a first communication link, where the plurality of first PPDUs are used to train a transmit beam of the first station and/or a receive beam of the second station. The transceiver module 11 is configured to receive a part of the plurality of first PPDUs from the first station over the first communication link. The transceiver module 11 is further configured to send a first stop frame to the first station over a second communication link, where the first stop frame indicates the first station to stop sending an unsent PPDU in the plurality of first PPDUs over the first communication link. The first station and the second station are multi-link devices, and a frequency band on which the first communication link operates is higher than a frequency band on which the second communication link operates.

In another possible implementation, the processing module 12 is configured to determine to receive a plurality of first physical layer protocol data units PPDUs from a first station over a first communication link, where the plurality of first PPDUs are used to train a transmit beam of the first station and/or a receive beam of the second station. The transceiver module 11 is configured to receive second information from the first station over a second communication link, where the second information includes information about a plurality of transmit beams for sending the plurality of first PPDUs. The transceiver module 11 is further configured to receive a part or all of the plurality of first PPDUs from the first station over the first communication link. The first station and the second station are multi-link devices, and a frequency band on which the first communication link operates is higher than a frequency band on which the second communication link operates.

In still another possible implementation, the processing module 12 is configured to determine to receive a plurality of first physical layer protocol data units PPDUs from a first station over a first communication link, where the plurality of first PPDUs are used to train a transmit beam of the first station and/or a receive beam of the second station. The transceiver module 11 is configured to: receive a part of the plurality of first PPDUs from the first station over the first communication link, and perform beam training based on the part of the first PPDUs. The transceiver module 11 is further configured to send a first recommendation frame to the first station over a second communication link, where the first recommendation frame includes first beam training information obtained by the second station through beam training. The first station and the second station are multi-link devices, and a frequency band on which the first communication link operates is higher than a frequency band on which the second communication link operates.

When the apparatus 10 is configured to perform the method in FIG. 6, the transceiver module 11 may be configured to perform steps of receiving and sending information in the method, for example, steps S620, S640, S650, and S670; and the processing module 12 may be configured to perform a processing step in the method, for example, steps S610 and S630.

When the apparatus 10 is configured to perform the method in FIG. 12, the transceiver module 11 may be configured to perform steps of receiving and sending information in the method, for example, steps S1220, S1240, S1260, and S1280; and the processing module 12 may be configured to perform a processing step in the method, for example, steps S1230 and S1290.

When the apparatus 10 is configured to perform the method in FIG. 18, the transceiver module 11 may be configured to perform steps of receiving and sending information in the method, for example, steps S1820, S1830, S1840, and S1860; and the processing module 12 may be configured to perform a processing step in the method, for example, steps S1810 and S1850.

It should be understood that a specific process in which the units perform the foregoing corresponding steps is described in detail in the foregoing method embodiment. For brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first station) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may be a transceiver circuit (for example, may include a receiver circuit and a transmitter circuit), and the processing module may be a processing circuit.

FIG. 20 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 20, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 20, the apparatus 20 further includes a transceiver 23. The transceiver 23 is configured to receive and/or send a signal. For example, the processor 21 is configured to control the transceiver 23 to receive and/or send a signal.

In a solution, the apparatus 20 is configured to implement operations performed by the first station or the second station in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described in this specification is intended to include but is not limited to these memories and any memory of another proper type.

FIG. 21 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invokes instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first station or the second station in the foregoing method embodiments.

For example, the logic circuit 31 is configured to implement processing-related operations performed by the first station or the second station in the foregoing method embodiments, and the input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing the methods performed by the device in the foregoing method embodiments.

For example, when a computer program is executed by a computer, the computer is enabled to implement the methods performed by the first station or the second station in the foregoing method embodiments.

An embodiment of this application further provides a computer program product, including instructions. When the instructions are executed by a computer, the methods performed by the first station or the second station in the foregoing method embodiments are implemented.

An embodiment of this application further provides a communication system, including the first station and the second station.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in another manner. For example, the described apparatus embodiments are merely examples. For example, division into the units is merely logic function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

All or a part of the foregoing embodiments may be implemented by software, hardware, firmware, or any combination thereof. When the software is used for implementation, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    determining, by a first station, to send a plurality of first physical layer protocol data units PPDUs to a second station over a first communication link, wherein the plurality of first PPDUs are used to train a transmit beam of the first station and/or a receive beam of the second station;
    sending, by the first station, a part of the plurality of first PPDUs to the second station over the first communication link; and
    receiving, by the first station, a first stop frame from the second station over a second communication link, wherein the first stop frame indicates the first station to stop sending an unsent PPDU in the plurality of first PPDUs over the first communication link; and
    the first station and the second station are multi-link devices, and a frequency band on which the first communication link operates is higher than a frequency band on which the second communication link operates.

2. The method according to claim 1, wherein the method further comprises:

    determining, by the first station, to receive a plurality of second PPDUs from the second station over the first communication link, wherein the plurality of second PPDUs are used to train a transmit beam of the second station and/or a receive beam of the first station; and
    canceling, by the first station in response to the first stop frame, receiving the plurality of second PPDUs.

3. The method according to claim 1, wherein the method further comprises:

    determining, by the first station, to receive a plurality of second PPDUs from the second station over the first communication link, wherein the plurality of second PPDUs are used to train a transmit beam of the second station and/or a receive beam of the first station; and
    after receiving, by the first station, the first stop frame from the second station over the second communication link, the method further comprises:
    receiving, by the first station, a part or all of the plurality of second PPDUs over the first communication link.

4. The method according to claim 1, wherein the method further comprises:

    determining, by the first station, to receive a plurality of second PPDUs from the second station over the first communication link, wherein the plurality of second PPDUs are used to train a transmit beam of the second station and/or a receive beam of the first station; and
    before sending, by the first station, the part of the plurality of first PPDUs to the second station over the first communication link, the method further comprises:
    receiving, by the first station, a part or all of the plurality of second PPDUs from the second station over the first communication link.

5. The method according to claim 3 or 4, wherein the first station receives the part of the plurality of second PPDUs from the second station over the first communication link, and the method further comprises:
    sending, by the first station, a second stop frame to the second station over the second communication link, wherein the second stop frame indicates the second station to stop sending an unsent PPDU in the plurality of second PPDUs over the second communication link.

6. The method according to claim 5, wherein before sending, by the first station, the second stop frame to the second station over the second communication link, the method further comprises:

    performing, by the first station, beam training based on the received part of the second PPDUs; and
    determining, by the first station, a transmit beam of the second station and/or a receive beam of the first station that meet/meets a preset condition.

7. The method according to any one of claims 3 to 6, wherein the method further comprises:

    determining, by the first station, the receive beam of the first station based on a first mapping table and information about a transmit beam for the received second PPDU, wherein

the first mapping table comprises a mapping relationship between the information about the transmit beam for the second PPDU and information about the receive beam of the first station.

8. The method according to any one of claims 3 to 7, wherein before receiving, by the first station, the part or all of the plurality of second PPDUs from the second station over the first communication link, the method further comprises: receiving, by the first station, first information from the second station over the second communication link, wherein the first information comprises information about a plurality of transmit beams for sending the plurality of second PPDUs.

9. The method according to claim 8, wherein the first information comprises at least one of the following information: an identifier, a radio frequency chain identifier, an antenna identifier, a sector identifier, a count identifier, or an antenna weight vector identifier of the beam for sending the second PPDU.

10. The method according to any one of claims 3 to 9, wherein the second PPDU comprises a first training field; and the first training field is sent on the beam for sending the second PPDU, or the first training field is sent on a beam other than the beam for sending the second PPDU.

11. The method according to claim 10, wherein the method further comprises: receiving, by the first station, first indication information from the second station over the second communication link, wherein the first indication information indicates a number of times that the first training field is sent on the beam for sending the second PPDU, or the first indication information indicates a beam for sending the first training field.

12. The method according to any one of claims 1 to 11, wherein before sending, by the first station, the part of the plurality of first PPDUs to the second station over the first communication link, the method further comprises: sending, by the first station, second information to the second station over the second communication link, wherein the second information comprises information about a plurality of transmit beams for sending the plurality of first PPDUs.

13. The method according to claim 12, wherein the second information comprises at least one of the following information: an identifier, a radio frequency chain identifier, an antenna identifier, a sector identifier, a count identifier, or an antenna weight vector identifier of the beam for sending the first PPDU.

14. The method according to any one of claims 1 to 13, wherein the first PPDU comprises a second training field; and the second training field is sent on the beam for sending the first PPDU, or the second training field is sent on a beam other than the beam for sending the first PPDU.

15. The method according to claim 14, wherein the method further comprises: sending, by the first station, second indication information to the second station over the second communication link, wherein the second indication information indicates a number of times that the second training field is sent on the beam for sending the first PPDU, or the second indication information indicates a beam for sending the second training field.

16. The method according to any one of claims 1 to 15, wherein after receiving, by the first station, the first stop frame from the second station over the second communication link, the method further comprises: stopping, by the first station in response to the first stop frame after first duration, sending the unsent PPDU in the plurality of first PPDUs.

17. The method according to any one of claims 1 to 15, wherein the first stop frame comprises information about at least one transmit beam of the first station and/or information about at least one receive beam of the second station, and the at least one transmit beam of the first station matches the at least one receive beam of the second station.

18. The method according to claim 17, wherein the first stop frame further comprises quality information of the at least one transmit beam of the first station and/or quality information of the at least one receive beam of the second station.

19. The method according to any one of claims 1 to 18, wherein before determining, by the first station, to send the plurality of first PPDUs to the second station over the first communication link, the method further comprises: determining, by the first station, that a beam for information transmission on the frequency band on which the first communication link between the first station and the second station operates fails.

20. A communication method, comprising:

determining, by a second station, to receive a plurality of first physical layer protocol data units PPDUs from a first station over a first communication link, wherein the plurality of first PPDUs are used to train a transmit beam of the first station and/or a receive beam of the second station;

receiving, by the second station, a part of the plurality of first PPDUs from the first station over the first communication link; and

sending, by the second station, a first stop frame to the first station over a second communication link, wherein the first stop frame indicates the first station to stop sending an unsent PPDU in the plurality of first PPDUs over the first communication link; and

the first station and the second station are multi-link devices, and a frequency band on which the first communication link operates is higher than a frequency band on which the second communication link operates.

21. The method according to claim 20, wherein before sending, by the second station, the first stop frame to the first station over the second communication link, the method further comprises:

performing, by the second station, beam training based on the part of the first PPDUs; and

determining, by the second station, a transmit beam of the first station and/or a receive beam of the second station that meet/meets a preset condition.

22. The method according to claim 20 or 21, wherein the method further comprises:

determining, by the second station, to send a plurality of second PPDUs to the first station over the first communication link, wherein the plurality of second PPDUs are used to train a transmit beam of the second station and/or a receive beam of the first station; and

canceling, by the second station based on the first stop frame, sending the plurality of second PPDUs.

23. The method according to claim 20 or 21, wherein the method further comprises:

determining, by the second station, to send a plurality of second PPDUs to the first station over the first communication link, wherein the plurality of second PPDUs are used to train a transmit beam of the second station and/or a receive beam of the first station; and

after sending, by the second station, the first stop frame to the first station over the second communication link, the method further comprises:

sending, by the second station, a part or all of the plurality of second PPDUs to the first station over the first communication link.

24. The method according to claim 20 or 21, wherein the method further comprises:

determining, by the second station, to send a plurality of second PPDUs to the first station over the first communication link, wherein the plurality of second PPDUs are used to train a transmit beam of the second station and/or a receive beam of the first station; and

before receiving, by the second station, the part of the plurality of first PPDUs from the first station over the first communication link, the method further comprises:

sending, by the second station, a part or all of the plurality of second PPDUs to the first station over the first communication link.

25. The method according to claim 23 or 24, wherein when the second station sends the part of the plurality of second PPDUs to the first station over the first communication link, the method further comprises:

receiving, by the second station, a second stop frame from the first station over the second communication link, wherein the second stop frame indicates the second station to stop sending an unsent PPDU in the plurality of second PPDUs over the second communication link.

26. The method according to claim 25, wherein after receiving, by the second station, the second stop frame from the first station over the second communication link, the method further comprises:

stopping, by the second station in response to the second stop frame after second duration, sending the unsent PPDU in the plurality of second PPDUs.

27. The method according to any one of claims 20 to 26, wherein the method further comprises:

determining, by the second station, the receive beam of the second station based on a second mapping table and information about a transmit beam for the received first PPDU, wherein
the second mapping table comprises a mapping relationship between the information about the transmit beam for the first PPDU and information about the receive beam of the second station.

28. The method according to any one of claims 22 to 27, wherein before sending, by the second station, the part or all of the plurality of second PPDUs to the first station over the first communication link, the method further comprises:
sending, by the second station, first information to the first station over the second communication link, wherein the first information comprises information about a plurality of transmit beams for sending the plurality of second PPDUs.

29. The method according to claim 28, wherein the first information comprises at least one of the following information: an identifier, a radio frequency chain identifier, an antenna identifier, a sector identifier, a count identifier, or an antenna weight vector identifier of the beam for sending the second PPDU.

30. The method according to any one of claims 22 to 29, wherein the second PPDU comprises a first training field; and the first training field is sent on the beam for sending the second PPDU, or the first training field is sent on a beam other than the beam for sending the second PPDU.

31. The method according to claim 30, wherein the method further comprises:
sending, by the second station, first indication information to the first station over the second communication link, wherein the first indication information indicates a number of times that the first training field is sent on the beam for sending the second PPDU, or the first indication information indicates a beam for sending the first training field.

32. The method according to any one of claims 20 to 31, wherein before receiving, by the second station, the part of the plurality of first PPDUs from the first station over the first communication link, the method further comprises:
receiving, by the second station, second information from the first station over the second communication link, wherein the second information comprises information about a plurality of transmit beams for sending the plurality of first PPDUs.

33. The method according to claim 32, wherein the second information comprises at least one of the following information: an identifier, a radio frequency chain identifier, an antenna identifier, a sector identifier, a count identifier, or an antenna weight vector identifier of the beam for sending the first PPDU.

34. The method according to any one of claims 20 to 33, wherein the first PPDU comprises a second training field; and the second training field is sent on the beam for sending the first PPDU, or the second training field is sent on a beam other than the beam for sending the first PPDU.

35. The method according to claim 34, wherein the method further comprises:
receiving, by the second station, second indication information from the first station over the second communication link, wherein the second indication information indicates a number of times that the second training field is sent on the beam for sending the first PPDU, or the second indication information indicates a beam for sending the second training field.

36. The method according to any one of claims 20 to 35, wherein the first stop frame comprises information about at least one transmit beam of the first station and/or information about at least one receive beam of the second station, and the at least one transmit beam of the first station matches the at least one receive beam of the second station.

37. The method according to claim 36, wherein the first stop frame further comprises quality information of the at least one transmit beam of the first station and/or quality information of the at least one receive beam of the second station.

38. A communication apparatus, comprising a unit configured to perform the method according to any one of claims 1 to 19, or comprising a unit configured to perform the method according to any one of claims 20 to 37.

39. A communication apparatus, comprising:
a processor, configured to execute a computer program stored in a memory, to enable the apparatus to perform the method according to any one of claims 1 to 19, or enable the apparatus to perform the method according to any one of claims 20 to 37.

**40.** The apparatus according to claim 39, wherein the apparatus further comprises the memory.

**41.** A computer-readable storage medium, wherein the computer-readable storage medium stores a computer program, and when the computer program is run on a computer, the computer is enabled to perform the method according to any one of claims 1 to 37.

**42.** A computer program product, wherein the computer program product comprises instructions for performing the method according to any one of claims 1 to 37.

**43.** A communication system, comprising a first station and/or a second station, wherein the first station is configured to perform the method according to any one of claims 1 to 19, and the second station is configured to perform the method according to any one of claims 20 to 37.

FIG. 1

FIG. 2

PPDU

| | Common field | User-specific field |

| L-STF (legacy short training field) | L-LTF (legacy long training field) | L-SIG (legacy signal field) | RL-SIG (repeated legacy signal field) | U-SIG (universal signal field) | EHT-SIG (EHT signal field) | EHT-STF (EHT short training field) | EHT-LTF (EHT long training field) | Data (data field) | PE (packet extension field) |

FIG. 3

Beacon interval

| BHI<br>Beacon header indication | | | DTI<br>Data transmission interval | | | |
|---|---|---|---|---|---|---|
| BTI<br>Beacon<br>transmission<br>interval | A-BFT<br>Association<br>beamforming<br>training | ATI<br>Announcement<br>transmission<br>interval | CBAP 1<br>Contention-<br>based access<br>period | SP 1<br>Service<br>period | SP 2 | CBAP 2 |

FIG. 4

| B0 | B1 | B6 | B7 |
|---|---|---|---|
| Beam link maintenance unit index | Beam link maintenance value | | Beam link is master |

Bit:      1                  6                  1

FIG. 5

FIG. 6

FIG. 7

EP 4 761 133 A1

: a signal transmitted over a first communication link

: a signal transmitted over a second communication link

Initiator device

| First PPDU #1 | First PPDU #2 | First PPDU #3 |

Responder device

| First stop frame | Second PPDU #1 | Second PPDU #2 | Second PPDU #3 | ... | Second PPDU #9 | Second PPDU #10 |

FIG. 8

FIG. 9

: a signal transmitted over a first communication link

: a signal transmitted over a second communication link

Initiator device

| Second PPDU #1 | Second PPDU #2 | Second PPDU #3 | ... | Second PPDU #9 | Second PPDU #10 | | | | First stop frame |

Responder device

First PPDU #1  First PPDU #2  First PPDU #3

FIG. 10

EP 4 761 133 A1

FIG. 11

```
┌─────────────────────┐                    ┌─────────────────────┐
│    First station    │                    │    Second station   │
└──────────┬──────────┘                    └──────────┬──────────┘
┌──────────┴────────────────────────────────────────────────────┐
│ S1210: Determine to transmit a plurality of first PPDUs and a  │
│   plurality of second PPDUs over a first communication link    │
└──────────┬────────────────────────────────────────────────────┘
           │─────────── S1220: First PPDU ──────────▶│
           │                              ┌──────────┴──────────────────┐
           │                              │ S1230: Perform beam training │
           │                              └──────────┬──────────────────┘
           │◀───── S1240: First recommendation frame ─┤
┌──────────┴─────────────────┐           │
│ S1250: Adjust a policy for  │          │
│ sending a remaining first PPDU │       │
└──────────┬─────────────────┘           │
           │◀──────── S1260: Second PPDU ────────────┤
┌──────────┴──────────────────┐          │
│ S1270: Perform beam training │          │
└──────────┬──────────────────┘          │
           │── S1280: Second recommendation frame ──▶│
           │                     ┌───────────────────┴──────────┐
           │                     │ S1290: Adjust a policy for    │
           │                     │ sending a remaining second    │
           │                     │          PPDU                 │
           │                     └──────────────────────────────┘
```

FIG. 12

Initiator
device

| First PPDU #1 | First PPDU #2 | First PPDU #3 | ... | First PPDU #9 | First PPDU #10 |

Responder
device

| Second PPDU #1 | Second PPDU #2 | Second PPDU #3 | ... | Second PPDU #9 | Second PPDU #10 |

First recommendation frame

FIG. 13

FIG. 14

EP 4 761 133 A1

: a signal transmitted
over a first
communication link

: a signal transmitted
over a second
communication link

First recommendation frame

Initiator
device

| Second PPDU #1 | Second PPDU #2 | Second PPDU #3 | ... | Second PPDU #9 | Second PPDU #10 |

Responder
device

| First PPDU #1 | First PPDU #2 | First PPDU #3 | ... | First PPDU #9 | First PPDU #10 |

FIG. 15

FIG. 16

(a)  (b)  (c)

Repeat for a plurality of times

FIG. 17

EP 4 761 133 A1

| First station | | Second station |
|---|---|---|

S1810: Determine to transmit a plurality of first PPDUs and a plurality of second PPDUs over a first communication link

S1820: Second information →

← S1830: First information

S1840: First PPDU →

S1850: Perform beam training

← S1860: Second PPDU

S1870: Perform beam training

FIG. 18

10

| Transceiver module 11 |
|---|

| Processing module 12 |
|---|

| Storage module 13 |
|---|

FIG. 19

20

FIG. 20

FIG. 21

## INTERNATIONAL SEARCH REPORT

| International application No. |
| --- |
| **PCT/CN2024/114741** |

**A.    CLASSIFICATION OF SUBJECT MATTER**

H04B 7/06(2006.01)i

According to International Patent Classification (IPC) or to both national classification and IPC

**B.    FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS: CNTXT; VEN; USTXT; EPTXT; WOTXT; CNKI; IEEE; 3GPP: 物理层协议数据单元, 波束, 训练, 多链路, 停止, 结束, 取消, 发送, PPDU, beam, train, BFT, multilink, stop, end, cancel, send

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109565707 A (LG ELECTRONICS INC.) 02 April 2019 (2019-04-02) description, paragraphs [0053]-[0255] | 1-43 |
| A | US 2020162146 A1 (LG ELECTRONICS INC.) 21 May 2020 (2020-05-21) entire document | 1-43 |
| A | WO 2020248867 A1 (HUAWEI TECHNOLOGIES CO., LTD.) 17 December 2020 (2020-12-17) entire document | 1-43 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 November 2024** | **24 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/114741**

| Patent document cited in search report | | | Publication date (day/month/year) | Patent family member(s) | | | Publication date (day/month/year) |
|---|---|---|---|---|---|---|---|
| CN | 109565707 | A | 02 April 2019 | None | | | |
| US | 2020162146 | A1 | 21 May 2020 | US | 11082113 | B2 | 03 August 2021 |
| WO | 2020248867 | A1 | 17 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311129377